(19) Europäisches Patentamt
European Patent Office
Office européen des brevets

(11) **EP 4 535 618 A1**

(12) **EUROPEAN PATENT APPLICATION**

(43) Date of publication:
**09.04.2025 Bulletin 2025/15**

(21) Application number: **24204493.1**

(22) Date of filing: **03.10.2024**

(51) International Patent Classification (IPC):
**H02K 1/276** (2022.01)       **H02K 7/14** (2006.01)

(52) Cooperative Patent Classification (CPC):
**H02K 1/276; H02K 1/2766; H02K 7/145;**
H02K 2201/03; H02K 2213/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **06.10.2023   US 202363588370 P**

(71) Applicant: **Milwaukee Electric Tool Corporation
Brookfield, WI 53005 (US)**

(72) Inventors:
• **FARHAN, Ashad**
  **Brookfield, WI 53005 (US)**
• **KULKARNI, Rohan**
  **Milwaukee, WI 53212 (US)**

(74) Representative: **Forresters IP LLP
Skygarden
Erika-Mann-Straße 11
80636 München (DE)**

(54)    **POWER TOOL INCLUDING A FLUX INTENSIFYING MOTOR**

(57)    Power tools described herein include a battery pack interface configured to receive a removable and rechargeable battery pack and a motor. The motor includes a stator including a plurality of stator teeth configured to receive a plurality of stator coils and a rotor. The rotor includes a plurality of slots configured in a spoke-type configuration, each of the plurality of slots including a magnet housing portion configured to receive one or more magnets. The rotor includes a direct axis inductance and a quadrature axis inductance. The direct axis inductance of the rotor is greater than the quadrature axis inductance of the rotor, and a direct axis current of the motor is positive during operation of the motor.

FIG. 1

EP 4 535 618 A1

**Description**

RELATED APPLICATIONS

This application claims the benefit of U.S. Provisional Patent Application No. 63/588,370, filed October 6, 2023, the entire content of which is hereby incorporated by reference.

FIELD

This disclosure relates to power tools.

SUMMARY

Embodiments described herein related to power tools that include flux intensifying motors.

Power tools described herein include a battery pack interface configured to receive a removable and rechargeable battery pack and a motor. The motor includes a stator including a plurality of stator teeth configured to receive a plurality of stator coils and a rotor. The rotor includes a plurality of slots configured in a spoke-type configuration, each of the plurality of slots including a magnet housing portion configured to receive one or more magnets. The rotor includes a direct axis inductance and a quadrature axis inductance. The direct axis inductance of the rotor is greater than the quadrature axis inductance of the rotor, and a direct axis current of the motor is positive during operation of the motor.

In some aspects, each magnet housing portion includes a centrally-located mid-rib that divides each magnet housing portion into a first section and a second section.

In some aspects, the first section is configured to receive a first magnet and the second section is configured to receive a second magnet.

In some aspects, the rotor includes a total of eight magnets.

In some aspects, the rotor includes a total of four magnets.

In some aspects, each of the plurality of slots includes an open air gap at an outer circumferential surface of the rotor.

In some aspects, the rotor includes a plurality of air gaps positioned between adjacent ones of the plurality of slots.

In some aspects, the rotor includes a magnet volume of less than 3,000 millimeters cubed ("mm$^3$").

In some aspects, the rotor includes a magnet volume of less than 1,500 millimeters cubed ("mm$^3$").

Power tools described herein include a battery pack interface configured to receive a removable and rechargeable battery pack and a motor. The motor includes a stator including a plurality of stator teeth configured to receive a plurality of stator coils and a rotor. The rotor includes a plurality of slots positioned perpendicular to a radial axis of the rotor, each of the plurality of slots including a magnet housing portion configured to receive one or more magnets. The rotor includes a direct axis inductance and a quadrature axis inductance. The direct axis inductance of the rotor is greater than the quadrature axis inductance of the rotor, and a direct axis current of the motor is positive during operation of the motor.

In some aspects, each magnet housing portion includes a centrally-located mid-rib that divides each magnet housing portion into a first section and a second section.

In some aspects, the first section is configured to receive a first magnet and the second section is configured to receive a second magnet.

In some aspects, the rotor includes a total of eight magnets.

In some aspects, the rotor includes a magnet volume of less than 3,000 millimeters cubed ("mm$^3$").

In some aspects, the rotor includes a magnet volume of less than 2,500 millimeters cubed ("mm$^3$").

In some aspects, the rotor includes a plurality of air gaps positioned on an outer circumferential surface of the rotor.

In some aspects, the plurality of air gaps are funnel-shaped and each of the plurality of air gaps is located between adjacent slots of the plurality of slots.

Power tools described herein include a battery pack interface configured to receive a removable and rechargeable battery pack and a motor. The motor includes a stator including a plurality of stator teeth configured to receive a plurality of stator coils and a rotor. The rotor includes a plurality of slots configured in pairs to form a V-shaped configuration, each of the plurality of slots including a magnet housing portion configured to receive one or more magnets, each pair of the plurality of slots includes a centrally-located mid-rib positioned between a first slot of the pair and a second slot of the pair. The rotor includes a direct axis inductance and a quadrature axis inductance. The direct axis inductance of the rotor is greater than the quadrature axis inductance of the rotor, and a direct axis current of the motor is positive during operation of the motor.

In some aspects, the rotor includes a magnet volume of less than 3,000 millimeters cubed ("mm$^3$").

In some aspects, the rotor includes a magnet volume of less than 1,500 millimeters cubed ("mm$^3$").

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the disclosure will become apparent by consideration of the detailed description and accompanying drawings.

BRIEF DESCRIPTION OF THE DRAWINGS

FIG. 1 illustrates a perspective view of a power tool, according to some embodiments.

FIG. 2 illustrates a block diagram of a control system of the power tool of FIG. 1, according to some embodiments.

FIG. 3 illustrates a battery pack for use with the power tool of FIG. 1, according to some embodiments.

FIG. 4 illustrates a block diagram of a control system of the battery pack of FIG. 3, according to some embodiments.

FIG. 5 illustrates a motor, according to some embodiments.

FIG. 5A illustrates a motor, according to some embodiments.

FIG. 5B illustrates a motor, according to some embodiments.

FIG. 5C illustrates a motor, according to some embodiments.

FIG. 6 illustrates a motor, according to some embodiments.

FIG. 7 illustrates a motor, according to some embodiments.

FIG. 8 illustrates a motor, according to some embodiments.

FIG. 8A illustrates a motor, according to some embodiments.

FIG. 9 illustrates a motor, according to some embodiments.

FIG. 9A illustrates a motor, according to some embodiments.

FIG. 10 illustrates a motor, according to some embodiments.

FIG. 11 illustrates a motor, according to some embodiments.

FIG. 12 illustrates a motor, according to some embodiments.

FIG. 12A illustrates a motor, according to some embodiments.

FIG. 12B illustrates a motor, according to some embodiments.

FIG. 12C illustrates a motor, according to some embodiments.

FIG. 12D illustrates a motor, according to some embodiments.

FIG. 12E illustrates a motor, according to some embodiments.

FIG. 13 illustrates a motor, according to some embodiments.

FIG. 14 illustrates a motor, according to some embodiments.

FIG. 15 illustrates a motor, according to some embodiments.

FIG. 16 illustrates a motor, according to some embodiments.

FIG. 17 illustrates a motor, according to some embodiments.

FIG. 18 illustrates a motor, according to some embodiments.

FIG. 19 illustrates a motor, according to some embodiments.

FIG. 20 illustrates a motor, according to some embodiments.

FIG. 21 illustrates a motor, according to some embodiments.

FIG. 22 illustrates a motor, according to some embodiments.

FIG. 23 illustrates a motor, according to some embodiments.

FIG. 24 is a graph showing performance characteristics of various motors, according to some embodiments.

FIG. 25 is a graph showing performance characteristics of various motors, according to some embodiments.

FIG. 26 illustrates a relationship between direct axis current and quadrature axis current, according to some embodiments.

FIG. 27 illustrates a relationship between direct axis current and quadrature axis current, according to some embodiments.

FIG. 28 illustrates a relationship between direct axis current and quadrature axis current, according to some embodiments.

FIG. 29 illustrates a relationship between direct axis current and quadrature axis current, according to some embodiments.

DETAILED DESCRIPTION

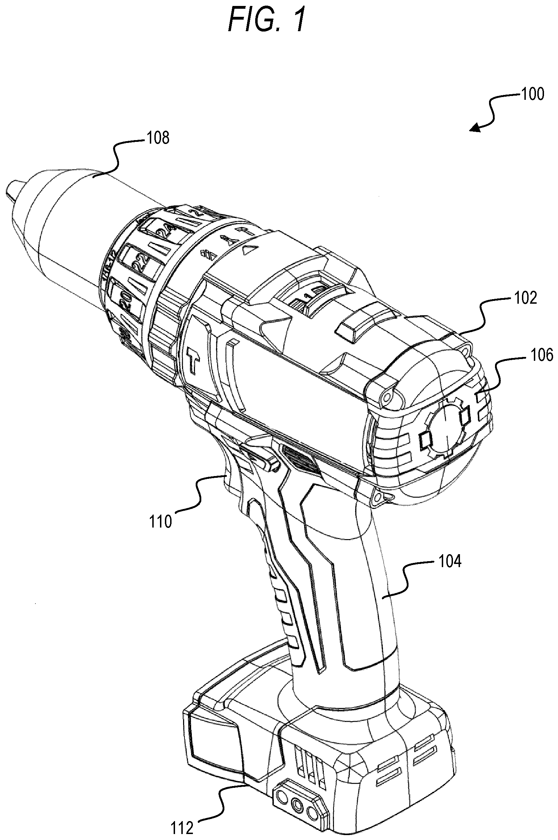

FIG. 1 illustrates a power tool 100 including a motor, such as a memory motor. The power tool 100 is, for example, a hammer drill including a housing 102. Although FIG. 1 illustrates a hammer drill, in some embodiments, the components described herein are incorporated into other types of power tools including drill-drivers, impact drivers, impact wrenches, angle grinders, circular saws, reciprocating saws, plate compactors, core drills, string trimmers, leaf blowers, vacuums, or other applicable applications that may use field weakening for motor operation. The housing 102 includes a handle portion 104 and motor housing portion 106. The power tool 100 further includes an output driver 108 (illustrated as a chuck), a trigger 110, and a battery pack interface 112. The battery pack interface 112 is configured to mechanically and electrically connect to or receive a power tool battery pack. In a memory motor power tool, such as power tool 100, switching elements are selectively enabled and disabled by control signals from a controller to selectively apply power from a power source (e.g., battery pack) to drive a memory motor.

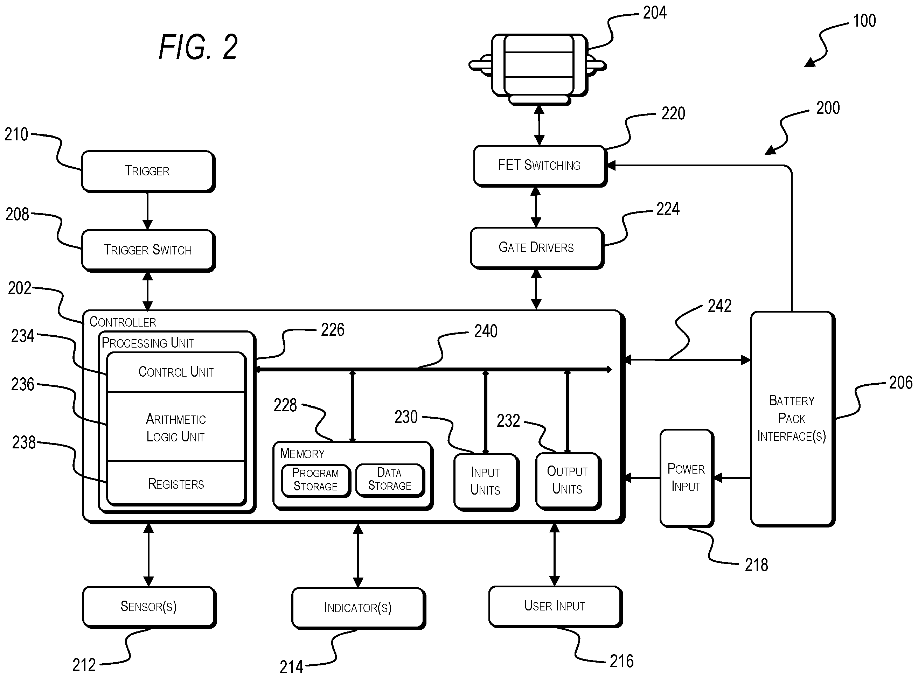

FIG. 2 illustrates a control system 200 for the power tool 100. The control system 200 includes a controller 202. The controller 202 is electrically and/or communicatively connected to a variety of modules or components of the power tool 100. For example, the illustrated controller 202 is electrically connected to a motor 204, a battery pack interface 206, a trigger switch 208 (connected to a trigger 210), one or more sensors or sensing circuits 212, one or more indicators 214, a user input module 216, a power input module 218, an inverter bridge or FET switching module 220 (e.g., including a plurality of switching FETs), and gate drivers 224 for driving the FET switching module 220. In some embodiments, motor 204 is a memory motor. The controller 202 includes combinations of hardware and software that are operable to, among other things, control the operation of the power tool 100, monitor the operation of the power tool 100, activate the one or more indicators 214 (e.g., an LED), etc.

The controller 202 includes a plurality of electrical and electronic components that provide power, operational control, and protection to the components and modules within the controller 202 and/or the power tool 100. For example, the controller 202 includes, among other things, a processing unit 226 (e.g., a microprocessor, a microcontroller, an electronic controller, an electronic processor, or another suitable programmable device), a memory 228, input units 230, and output units 232. The processing unit 226 includes, among other things, a control unit 234, an arithmetic logic unit ("ALU") 236, and a plurality of registers 238, and is implemented using a known computer architecture (e.g., a modified Harvard architecture, a von Neumann architecture, etc.). The processing unit 226, the memory 228, the input units 230, and the output units 232, as well as the various modules or circuits connected to the controller 202 are connected by one or more control and/or data buses (e.g., common bus 240). The control and/or data buses are shown generally in FIG. 2 for illustrative purposes. The use of one or more control and/or data buses for the interconnection between and communication among the various modules, circuits, and components would be known to a person skilled in the art in view of the invention described herein.

The memory 228 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 226 is connected to the memory 228 and executes software instructions that are capable of being stored in a RAM of the memory 228 (e.g., during execution), a ROM of the memory 228 (e.g., on a generally permanent basis), or another non-transitory computer readable medium such as another memory or a disc. Software included in the implementation of the power tool 100 can be stored in the memory 228 of the controller 202. The software includes, for example, firmware, one or more applications, program data, filters, rules, one or more program modules, and other executable instructions. The controller 202 is configured to retrieve from the memory 228 and execute, among other things, instructions related to the control processes and methods described herein. In other constructions, the controller 202 includes additional, fewer, or different components.

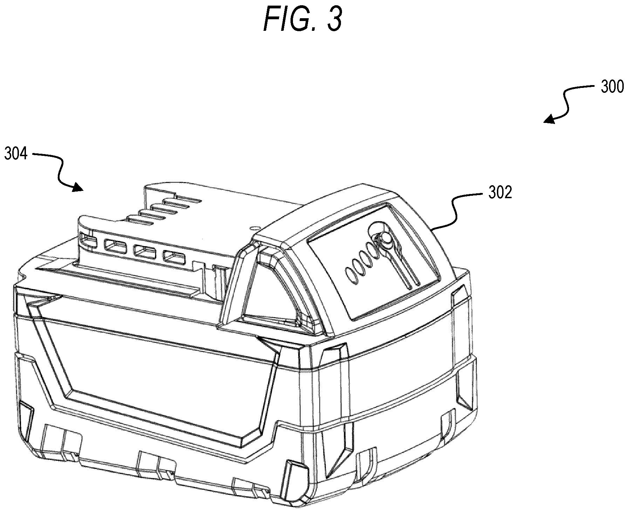

The battery pack interface 206 includes a combination of mechanical components (e.g., rails, grooves, latches, etc.) and electrical components (e.g., one or more terminals) configured to and operable for interfacing (e.g., mechanically, electrically, and communicatively connecting) with a battery pack. For example, power provided by a battery pack 300 (see FIG. 3) to the power tool 100 is provided through the battery pack interface 206 to the power input module 218. The power input module 218 includes combinations of active and passive components to regulate or control the power received from the battery pack 300 prior to power being provided to the controller 202. The battery pack interface 206 also supplies power to the FET switching module 220 to be switched by the switching FETs to selectively provide power to the motor 204. The battery pack interface 206 also includes, for example, a communication line 242 for providing a communication line or link between the controller 202 and the battery pack 300.

The sensors 212 include one or more current sensors, one or more speed sensors, one or more Hall effect sensors, one or more temperature sensors, etc. The indicators 214 include, for example, one or more light-emitting diodes ("LEDs"). The indicators 214 can be configured to display conditions of, or information associated with, the power tool 100. For example, the indicators 214 are configured to indicate measured electrical characteristics of the power tool 100, the status of the power tool, the status the motor 204, etc. The user input module 216 is operably coupled to the controller 202 to, for example, select a forward mode of operation or a reverse mode of operation, a torque and/or speed setting for the power tool 100 (e.g., using torque and/or speed switches), etc. In some embodiments, the user input module 216 includes a combination of digital and analog input or output devices required to achieve a desired level of operation for the power tool 100, such as one or more knobs, one or more dials, one or more switches, one or more buttons, etc.

FIG. 3 illustrates a battery pack 300. The battery pack 300 includes a housing 302 and an interface portion 304 for connecting the battery pack 300 to a power tool, such as the power tool 100.

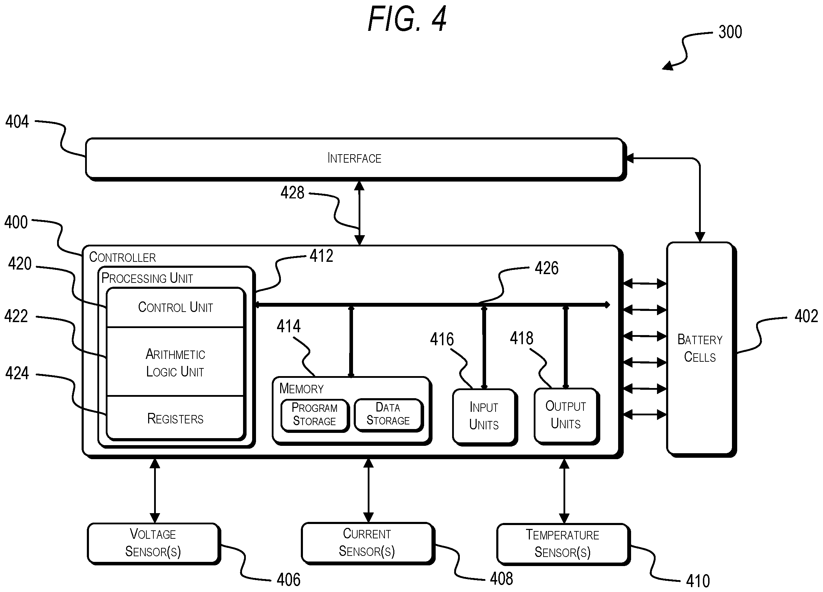

FIG. 4 illustrates a control system for the battery pack 300. The control system includes a controller 400. The controller 400 is electrically and/or communicatively connected to a variety of modules or components of the battery pack 300. For example, the illustrated controller 400 is connected to one or more battery cells 402 and an interface 404 (e.g., the interface portion 304 of the battery pack 300 illustrated in FIG. 3). The controller 400 is also connected to one or more voltage sensors or voltage sensing circuits 406, one or more current sensors or current sensing circuits 408, and one or more temperature sensors or temperature sensing circuits 410. The controller 400 includes combinations of hardware and software that are operable to, among other things, control the operation of the battery pack 300, monitor a condition of the battery pack 300, enable or disable charging of the battery pack 300, enable or disable discharging of the battery pack 300, etc.

The controller 400 includes a plurality of electrical and electronic components that provide power, operational control, and protection to the components and modules within the controller 400 and/or the battery pack 300. For example, the controller 400 includes, among other things, a processing unit 412 (e.g., a microprocessor, a microcontroller, an electronic processor, an electronic controller, or another suitable programmable device), a memory 414, input units 416, and output units 418. The processing unit 412 includes, among other things, a control unit 420, an ALU 422, and a plurality of registers 424, and is implemented using a known computer architecture (e.g., a modified Harvard architecture, a von Neumann architecture, etc.). The processing unit 412, the memory 414, the input units 416, and the output units 418, as well as the various modules or circuits connected to the controller 400 are connected by one or more control and/or data buses (e.g., common bus 426). The control and/or data buses are shown generally in FIG. 4 for illustrative purposes. The use of one or more control and/or data buses for the interconnection between and communication among the various modules, circuits, and components would be known to a person skilled in the art in view of the invention described herein.

The memory 414 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 412 is connected to the memory 414 and executes software instructions that are capable of being stored in a RAM of the memory 414 (e.g., during execution), a ROM of the memory 414 (e.g., on a generally permanent basis), or another non-transitory computer readable medium such as another memory or a disc. Software included in the implementation of the battery pack 300 can be stored in the memory 414 of the controller 400. The software includes, for example, firmware, one or more applications, program data, filters, rules, one or more program modules, and other executable instructions. The controller 400 is configured to retrieve from the memory 414 and execute, among other things, instructions related to the control processes and methods described herein. In other constructions, the controller 400 includes additional, fewer, or different components.

The interface 404 includes a combination of mechanical components (e.g., rails, grooves, latches, etc.) and electrical components (e.g., one or more terminals) configured to and operable for interfacing (e.g., mechanically, electrically, and communicatively connecting) the battery pack 300 with another device (e.g., a power tool, a battery pack charger, etc.). For example, the interface 404 is configured to communicatively connect to the controller 400 via a communications line 428.

A plurality of motors that can be used in the power tool 100 are described below as individual embodiments of the motor 204. The motors are, for example, flux intensifying motors. As is described in greater detail below, existing motors have a direct axis, or d-axis, current that is negative. When field weakening is used, the negative d-axis current increases, which causes a considerable amount of current to be drawn. Flux intensifying motors can be manufactured with manipulated rotor geometries (e.g., air gaps, voids, cutouts, spoke-type configurations, V-shaped configurations, etc) and magnets (e.g., thinner magnets, mid-ribs, multiple smaller magnets, etc.) in order to shift the d-axis current from a negative value to a positive value by adding d-axis inductance. When the d-axis inductance of a motor is greater than the quadrature, or q-axis, inductance, the motor is classified as a flux intensifying motor. Several examples of flux intensifying motors are described herein with respect to various techniques for achieving a flux intensifying motor.

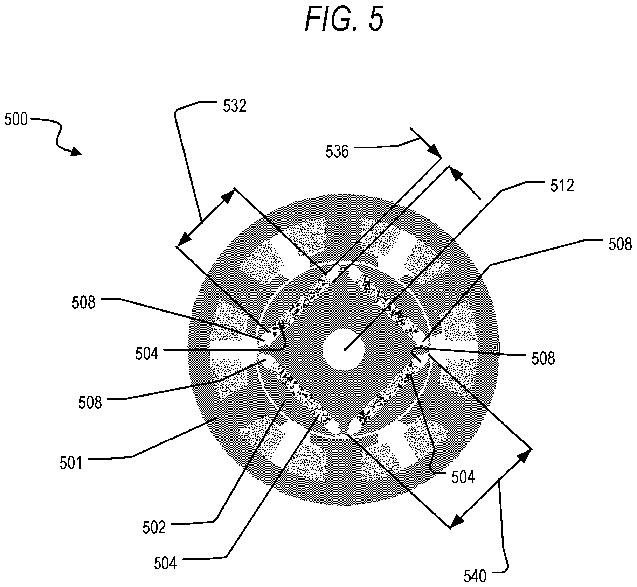

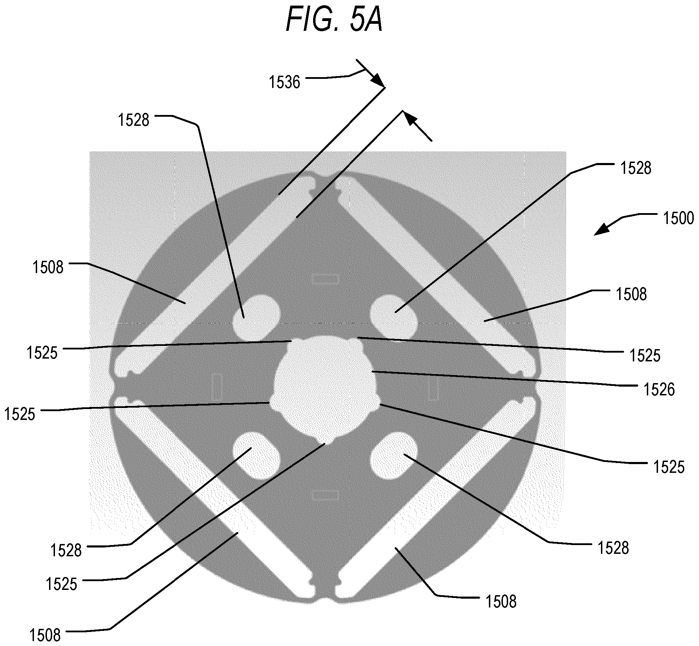

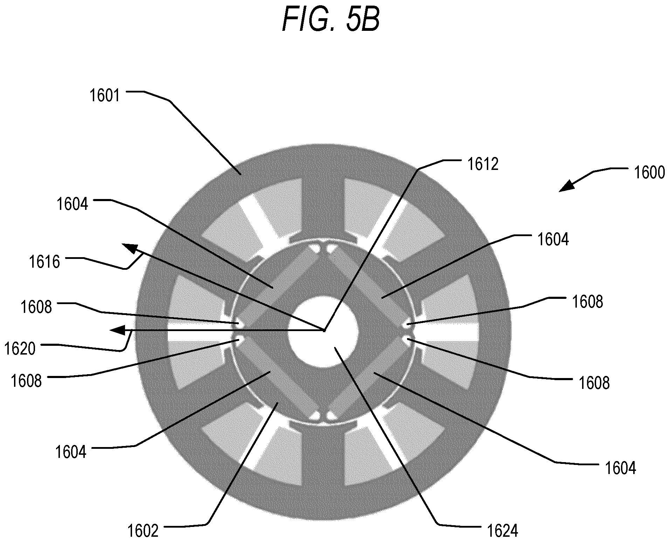

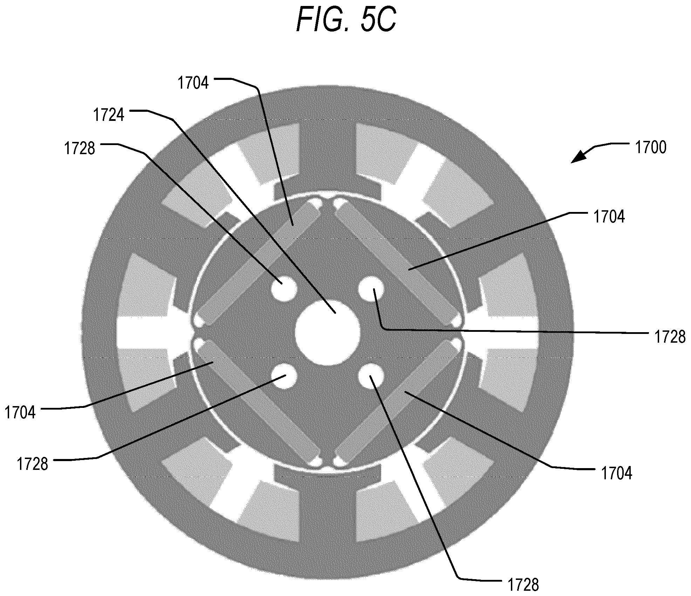

FIG. 5 illustrates a motor 500, according to some embodiments. In some embodiments, the motor 500 is, for example, a flux intensifying motor. The motor 500 includes a stator 501 and a rotor 502. The rotor 502 includes a plurality of permanent magnets 504 (and in the illustrated embodiment, four magnets 504) positioned in a rectangular configuration, and more specifically, in a square configuration about a longitudinal axis 512 of the motor 500 (i.e., perpendicular to a radial axis of the motor 500). The magnets 504 are positioned within respective magnet cavities 508 aligned parallel to the longitudinal axis 512 of the motor 500. Compared to the rotor 1602 of the motor 1600 (see FIG. 5B), the rotor 502 of the motor 500 includes a reduced amount of magnetic material. The magnets 504 include a magnet width 532 and a magnet thickness 536. Each magnet cavity 508 includes a cavity width 540. In the illustrated embodiment, the magnet width 532 is less than a width of the magnets 1604 of the motor 1600 (FIG. 5B) such that the motor 500 includes less total magnet material than does the motor 1600. In some embodiments, a ratio of the magnet width 532 to the cavity width 540 (i.e., the magnet width 532 divided by the cavity width 540) may be between 0.5 and 0.99, between 0.5 and 0.95, between 0.6 and 0.9, between 0.7 and 0.9, between 0.7 and 0.8, between 0.8 and 0.9, or between 0.9 and 0.95. The motor 500 includes a d-axis 516 and a q-axis 520.

FIG. 5A illustrates a rotor 1500 for an electric motor. The rotor 1500 includes a plurality of (and in the illustrated embodiment, four) recesses 1528 positioned about a central recess 1526. The recesses 1528 may be oblong. The central recess 1526 includes a plurality of (and in the illustrated embodiment, five) further recesses 1525 positioned equidistantly about the central recess 524 to increase a cross-sectional area of the central recess 1524 beyond that of a circle defined by a curved outer wall 1526 of the central recess 1524. Magnet cavities 1508 of the rotor 1500 include a cavity thickness 1536, which may be approximately equal to a magnet thickness of permanent magnets that fit within the cavities 1508. The cavity thickness 1536 may be, for example, between 1.0 mm and 3.0 mm, between 2.0 and 2.5 mm, between 2.1 mm and 2.2 mm, or approximately 2.15 mm. A volume of the magnets contained within the rotor 1500 may be, for example, between 2,500 $mm^3$ and 3,500 $mm^3$, between 2,800 $mm^3$ and 3,200 $mm^3$, approximately 3,000 $mm^3$, or approximately 3,013 $mm^3$.

FIG. 5B illustrates an internal permanent magnet ("IPM") motor 1600, according to some embodiments. The motor 1600 includes a stator 1601 (in the illustrated embodiment, an outer stator 1601) and a rotor 1602 (in the illustrated embodiment, an outer stator 1602). The rotor 1602 includes four permanent magnets 1604 positioned in a square configuration. The permanent magnets 1604 are positioned within respective magnet cavities 1608 aligned parallel to a longitudinal axis 1612 of the motor 1600. The motor 1600 includes d-axes 1616 (one of which is illustrated in FIG. 5B) and q-axes 1620 (one of which is illustrated in FIG. 5B). The motor 1600 includes a d-axis inductance $Ld_{1600}$ along the d-axis 1616 and a q-axis inductance $Lq_{1600}$ along the q-axis 1620. The rotor 1602 includes a central bore 1624 centered about the longitudinal axis 1612. The components of the motor 1600 are arranged such that the q-axis inductance $Lq_{1600}$ is greater than the d-axis inductance $Ld_{1600}$.

FIG. 5C illustrates an IPM motor 1700 that is similar to the motor 1600. The motor 1700 includes permanent magnets 1704, a central bore 1724, and a plurality (and in the illustrated embodiment, four) bores 1728 surrounding the central bore 1724. The bores 1728 may be circular and may be positioned between a respective magnet 1704 and the central bore 1724.

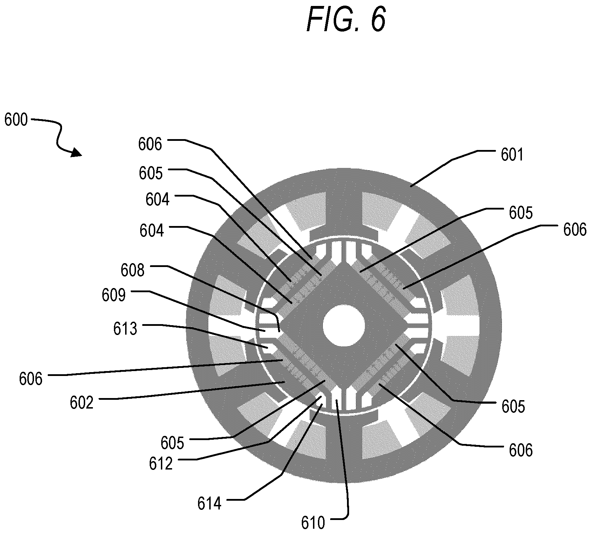

FIG. 6 illustrates a motor 600, according to some embodiments. In some embodiments, the motor 600 is, for example, a flux intensifying motor. The motor 600 is configured as a permanent magnet synchronous reluctance motor ("PMaSynRM"). The motor 600 includes an outer stator 601 and an inner rotor 602. The rotor 602 includes a plurality of (and in the illustrated embodiment, eight) permanent magnets 604. The magnets 604 are positioned in a double-layered rectangular, and more specifically in a double-layered square, configuration (i.e., perpendicular to a radial axis of the motor 600). The magnets 604 include four relatively wider magnets 605 and four relatively narrower magnets 606. Each wider magnet 605 is positioned radially inward from a respective one of the narrower magnets 606. Accordingly, the magnets 604 are arranged in pairs, each pair including an outer narrower magnet 606 and an inner wider magnet 605 and each pair positioned at a 90-degree angle relative to an adjacent pair. Each magnet 605 is positioned in an inner magnet cavity 608. Each inner magnet cavity 608 includes a first end 609 and an opposite second end 610, both of which are open to an outside of the rotor 602. Each magnet 606 is positioned in an outer magnet cavity 612. Each outer magnet cavity 612 includes a first end 613 and an opposite second end 614, both of which are open to an outside of the rotor 602. Air gaps can be positioned at each end of the magnetic cavities.

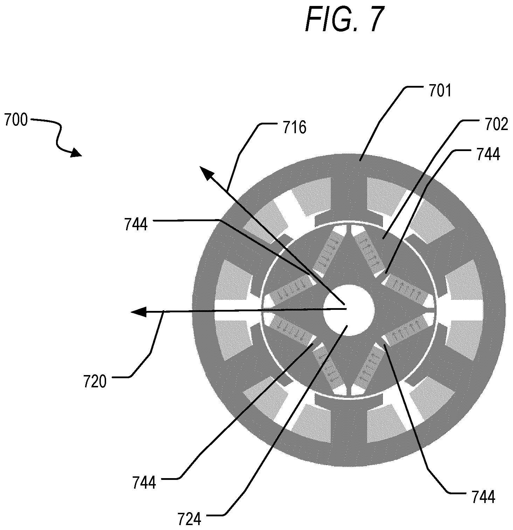

FIG. 7 illustrates a motor 700, according to some embodiments. In some embodiments, the motor 700 is, for example, a flux intensifying motor. The motor 700 includes an outer stator 701 and an inner rotor 702. The rotor 702 of the motor 700 includes permanent magnets 704 including a V-type configuration (e.g., magnets 704 are divided by mid-ribs 744, and adjacent magnet pairs are configured in V-shapes). The motor 700 includes d-axes 716 and q-axes 720, one of each of which is illustrated in FIG. 7. The mid-ribs 744 are positioned between the magnets 704 at an end of the magnets 704 closest to a central bore 724 of the motor 700.

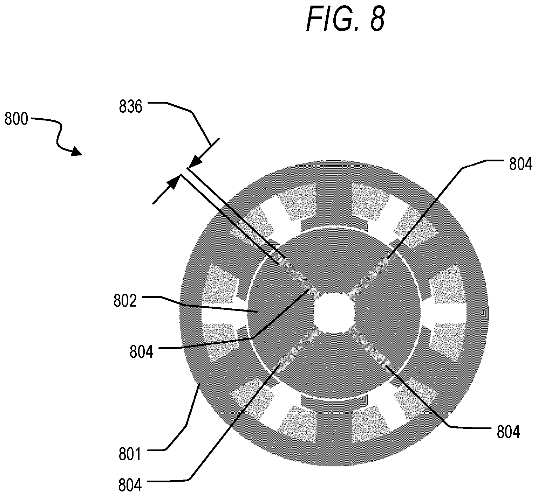

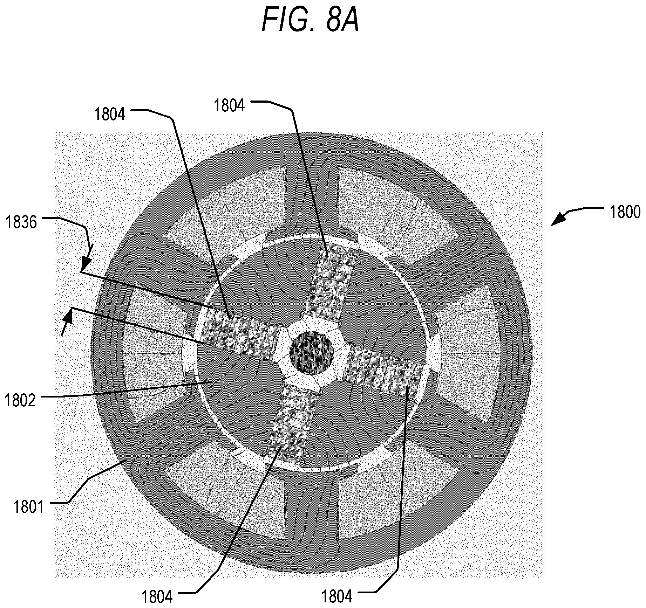

FIG. 8 illustrates a motor 800, according to some embodiments. In some embodiments, the motor 800 is, for example, a flux intensifying motor. The motor 800 includes an outer stator 801 and an inner rotor 802. The rotor 802 of the motor 800 includes permanent magnets 804 having a spoke-type configuration (e.g., the magnets 804 extend axially out from a center of the motor 800). Magnet cavities 808 of the rotor 802 house the magnets 804, which include a magnet thickness 836. The magnet thickness 836 may be approximately equal, in some embodiments, to a cavity thickness. In some embodiments, the thickness 836 may be between 1 mm and 3 mm, between 1.5 mm and 2.5 mm, approximately 2.0 mm, or approximately 1.8 mm. A volume of the magnets 804 within the rotor 802 may be between 1,000 mm$^3$ and 2,000 mm$^3$, between 1,200 mm$^3$ and 1,800 mm$^3$, between 1,400 mm$^3$ and 1,600 mm$^3$, approximately 1,500 mm$^3$ or less, or approximately 1,485 mm$^3$.

FIG. 8A illustrates a motor 1800, according to some embodiments. In some embodiments, the motor 1800 is, for example, a flux intensifying motor. The motor 1800 includes an outer stator 1801 and an inner rotor 1802. The rotor 1802 includes a plurality of (and in the illustrated embodiment four) permanent magnets 1804. The magnets 1804 include a magnet thickness 1836, which may be approximately equal, in some embodiments, to a cavity thickness. In some embodiments, the thickness 1836 may be between 2.0 mm and 8.0 mm, between 3.0 mm and 7.0 mm, between 3.0 mm and 4.0 mm, between 4.0 and 5.0 mm, between 5.0 and 6.0 mm, between 6.0 mm and 7.0 mm, between 4.0 mm and 6.0 mm, between 4.5 mm and 5.5 mm, or about 5.0 mm. A magnet volume may be about 1,500 mm$^3$ or about 1485 mm$^3$. In some embodiments, each of the plurality of magnet slots includes an open air gap at an outer circumferential surface of the rotor.

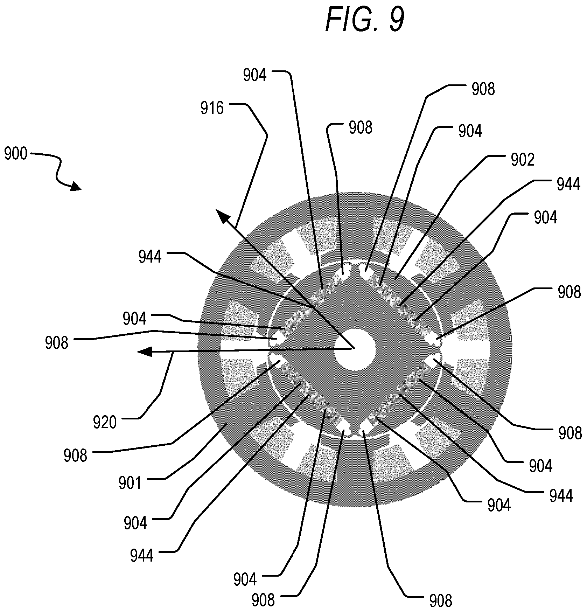

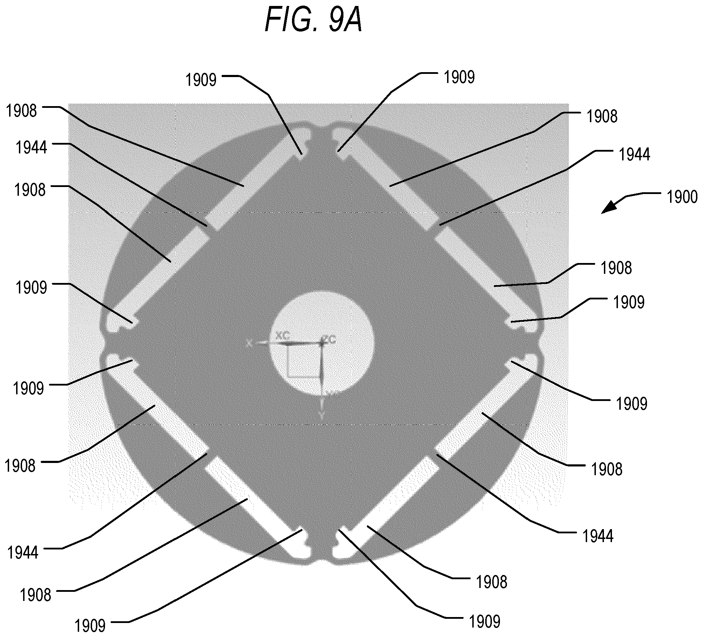

FIG. 9 illustrates a motor 900, according to some embodiments. In some embodiments, the motor 900 is, for example, a flux intensifying motor. The motor 900 includes an outer stator 901 and an inner rotor 902. The rotor 902 of the motor 900 includes a plurality of (and in the illustrated embodiment, eight) permanent magnets 904 positioned within the rotor 902 in a rectangular, and more specifically in the illustrated embodiment a square, configuration (i.e., perpendicular to a radial axis of the motor 900). Magnet cavities 908 of the rotor 902 house the magnets 904. The motor 900 is similar in some respects to the motor 500 of FIG. 5 except for certain differences apparent from the figures. For example, the rotor 902 includes mid-ribs 944, which separate two adjacent magnets 904 that are positioned along a same side of the rectangle and/or square in which the magnets 904 are arranged. Because of at least the mid-ribs 944, the rotor 902 of the motor 900 includes a reduced amount of magnetic material (i.e., a reduced cross-sectional area, and accordingly volume, of the magnets 904, which may save cost). Compared to the rotor 502 of the motor 500, the mid-ribs 944 of the rotor 902 of the motor 900 divide each magnet slot (i.e., magnet cavity) into two magnet slots or sections (e.g., magnet cavities 912). In some embodiments, the mid-ribs 944 are centrally-located at the center of each large magnet slot (e.g., cavity 512 of the motor 500 of FIG. 5). The motor 900 includes d-axes 916 and q-axes 920, one of each of which is illustrated in FIG. 9.

FIG. 9A illustrates a rotor 1900 for an electric motor. The rotor 1900 includes a plurality of (and in the illustrated embodiment, eight) magnet cavities 1908 arranged in a rectangular (and more specifically, in a square) configuration similar to, for example, the rotor 902 of FIG. 9. The rotor 1900 includes a plurality of (and in the illustrated embodiment, four) mid-ribs 1944 positioned between two adjacent cavities 1908. The mid-ribs are positioned at the middle, at approximately the middle, and/or in a middle region of a respective side of the rectangle and/or square defined by the cavities 1908. Each cavity 1908 includes a further recess 1909 (or air gap) positioned at an end of the cavity 1908 that is adjacent to another cavity 1908 that is positioned at approximately a 90-degree angle relative to the cavity 1908 on which the further recess 1909 is positioned. The further recesses 1909 are generally inward-facing rather than being outward-facing (that is, facing toward an outer circumference of the rotor 1900). A cavity thickness within which the magnets are positioned may be, for example, between 1.0 mm and 3.0 mm, between 1.25 mm and 1.75 mm, or about 1.5 mm. A volume of the magnets contained within the rotor 1500 may be, for example, between 1500 mm$^3$ and 2,000 mm$^3$, between 1,600 mm$^3$ and 1,800 mm$^3$, approximately 1,750 mm$^3$, or approximately 1,761 mm$^3$.

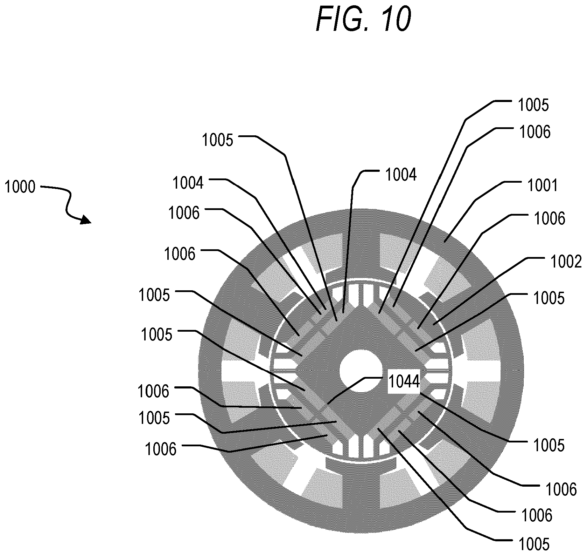

FIG. 10 illustrates a motor 1000, according to some embodiments. In some embodiments, the motor 1000 is, for example, a flux intensifying motor. The motor 1000 includes an outer stator 1001 and an inner rotor 1002. The motor 1000 is similar in some respects to the motor 600 of FIG. 6 except for certain differences apparent from the figures. For example, the rotor 1002 of the motor 1000 includes a plurality of (and in the illustrated embodiment, sixteen) permanent magnets 1004 positioned within the rotor 1002 in a double-layered rectangular, and more specifically in the illustrated embodiment a double-layered square, configuration (i.e., perpendicular to a radial axis of the motor 1000). The magnets 1004 include eight relatively wider magnets 1005 and eight relatively narrower magnets 1006. Each wider magnet 1005 is positioned radially inward of a respective narrower magnet 1006. Each magnet 1004 is positioned within a magnet cavity 1008. The motor 1000 is configured as a permanent magnet synchronous reluctance motor ("PMaSynRM"). The rotor 1002 of the motor 1000 also includes a plurality of mid-ribs 1044 that divide each cavity (i.e., each magnet slot) into two cavities 1008 (i.e., two magnet slots or sections). In some embodiments, the mid-ribs 1044 are centrally-located at the center of each large magnet slot. The mid-ribs 1044 are positioned at the middle, at approximately the middle, and/or in a middle region of a respective side of the rectangle and/or square defined by the cavities 1008.

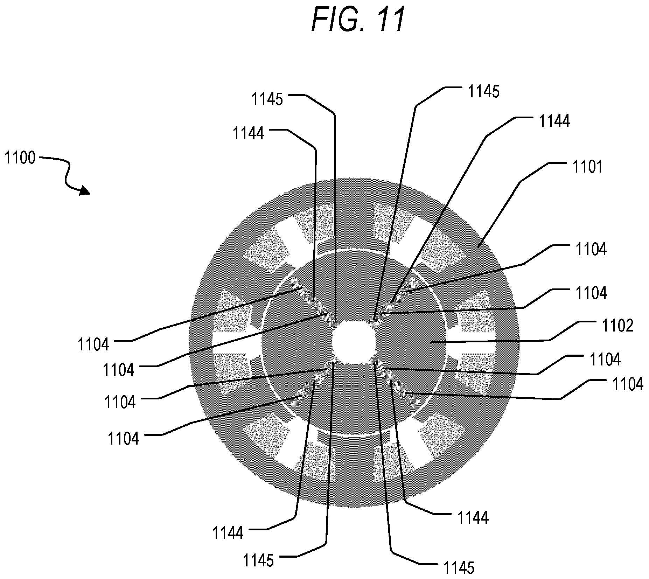

FIG. 11 illustrates a motor 1100, according to some embodiments. In some embodiments, the motor 1100 is, for example, a flux intensifying motor. The motor 1100 includes an outer stator 1101 and an inner rotor 1102. The motor 1100 is similar in certain respects to the motor 800 of FIG. 8 except for certain differences apparent from the figures. The rotor 1102 of the motor 1100 includes eight permanent magnets 1104 having a spoke-type configuration (e.g., extending axially out from the center of the motor) and positioned in magnet cavities, which in the illustrated embodiment are approximately fully occupied by the magnets 1104. The rotor 1102 of the motor 1100 also includes mid-ribs 1144 that divide each magnet slot of the embodiment of the motor 800 of FIG. 8 into two magnet slots (i.e., magnet cavities or sections). In some embodiments, the mid-ribs 1144 are centrally-located at the center of each large magnet slot. Each mid-rib 1144 may be positioned at a middle of a spoke 1145, at approximately a middle of the spoke 1145, and/or at approximately a middle region of the spoke 1145. Each spoke 1145 may be positioned at a 90-degree angle relative to an adjacent spoke 1145.

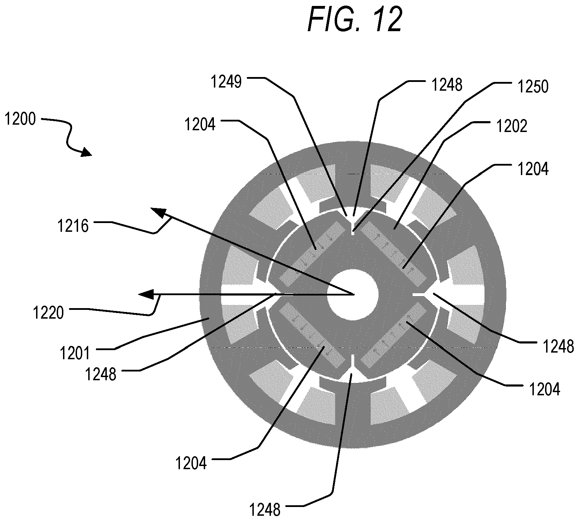

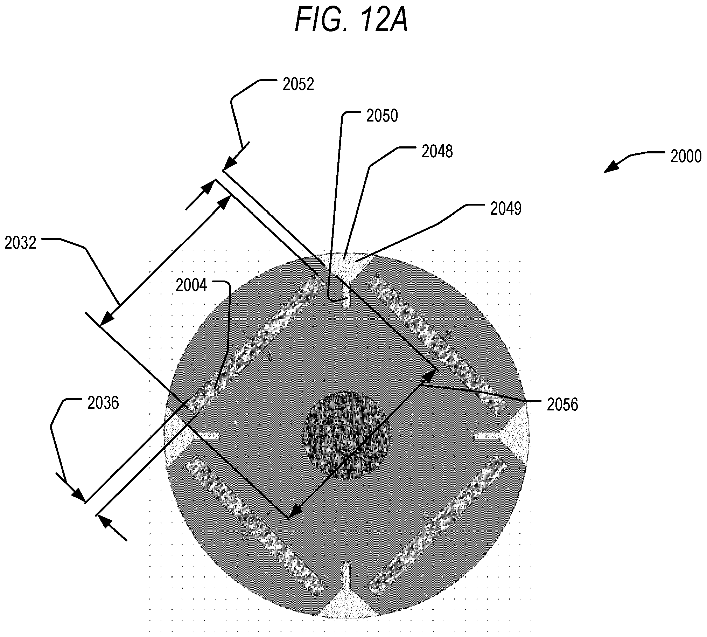

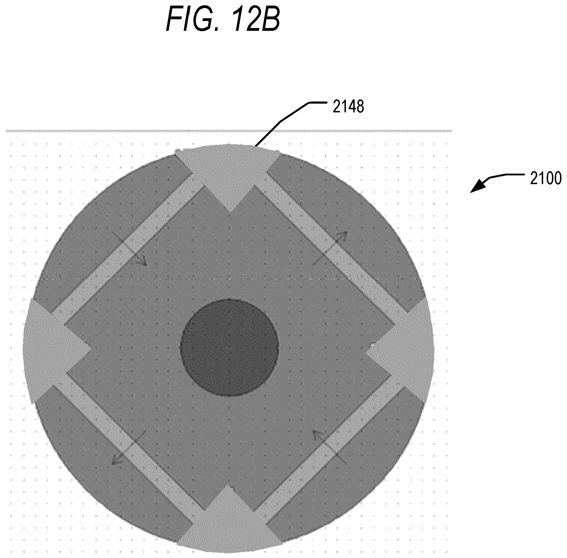

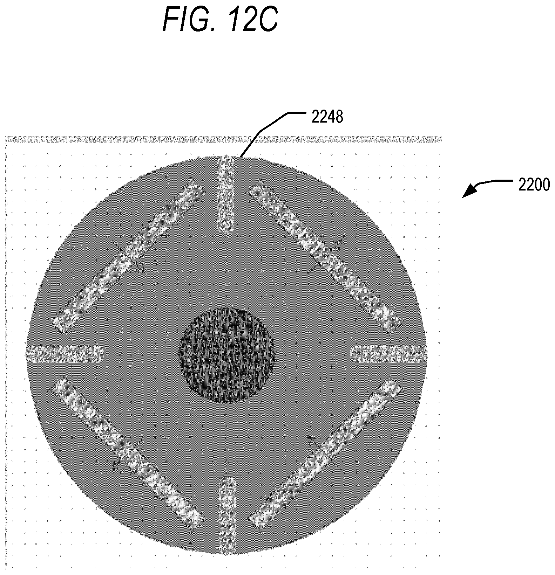

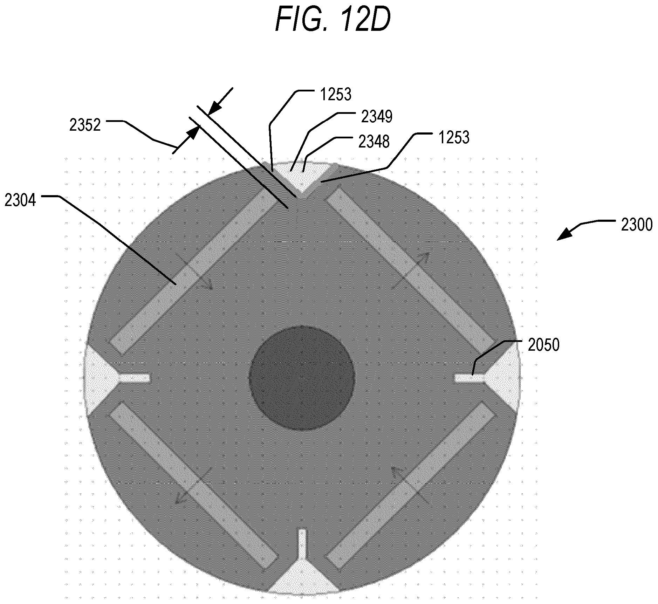

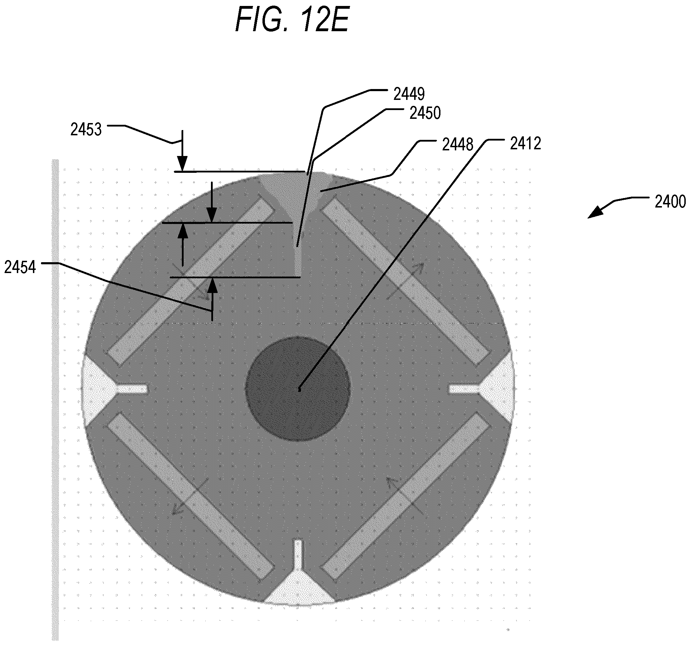

FIG. 12 illustrates a motor 1200, according to some embodiments. In some embodiments, the motor 1200 is, for example, a flux intensifying motor. The motor 1200 includes an outer stator 1201 and an inner rotor 1202. The rotor 1202 includes a plurality (and in the illustrated embodiment, four) permanent magnets 1204 arranged in a rectangular, and more specific in the illustrated embodiment a square, configuration in the rotor 1202 (i.e., perpendicular to a radial axis of the motor 1200). The motor 1200 may be similar in certain respects to the motors 500, 1600, 1700, of FIGS. 5, 5B, and 5C, respectively, except for certain differences apparent from the figures. For example, the rotor 1202 of the motor 1200 includes a plurality of gaps 1248 or voids in a rotor lamination stack of the rotor 1202. The gaps 1248 represent an area in which, for example, non-magnetic material is removed, which results in increased flux. The gaps 1248 are funnel-shaped and each includes a V-shaped portion 1249 and a linear portion 1250 extending from a tip of the V-shaped portion 1249. The gaps 1248 (and accordingly, the linear portions 1250) are aligned along a q-axis 1220 of the rotor 1202. The q-axis 1220 is positioned at an angle relative to a d-axis 1216. Each funnel-shaped gap 1248 is positioned 90-degrees from an adjacent funnel-shaped gap 1248. The gaps 1248 act as flux barrier along the q-axis 1220 to reduce the flux along the q-axis 1220 relative to the flux along the d-axis 1216.

FIG. 12A illustrates a rotor 2000, according to some embodiments, for use in an electric motor. In some embodiments, the rotor 2000 is, for example, a flux intensifying rotor. The rotor 2000 may be similar in certain respects to the rotor 1202 of FIG. 12 and includes permanent magnets 2004 and gaps 2048. The magnets 2004 may include a magnet width 2032 and a magnet thickness 2036. The gaps 1248 include V-shaped portions 2049 and linear portions 2050 extending from a tip of the V-shaped portions 1249. In some embodiments, the linear portions 2050 have a length of between zero and ten times the thickness of the rotor laminations. A distance 2052 between the magnets 2004 and the gaps 1248 (and more specifically, the V-shaped portions 1249) may be varied according to a desired performance of the rotor 2000. A distance 2056 between two adjacent gaps 1248 is, in some embodiments, greater than the width 2032 of the magnets 2004. A ratio of the distance 2052 between one of the magnets 2004 and an adjacent one of the gaps 1248 relative to the distance 2056 between two adjacent gaps 1248 may be between 0.01 and 0.15, between 0.01 and 0.10, between 0.02 and 0.09, between 0.03 and 0.08, between 0.03 and 0.07, between 0.04 and 0.08, between 0.05 and 0.08, between 0.06 and 0.08, or about 0.07. A ratio of the distance 2052 between one of the magnets 2004 and an adjacent one of the gaps 1248 relative to the width 2031 of the magnet 2004 may be between 0.01 and 0.15, between 0.02 and 0.12, between 0.03 and 0.10, between 0.04 and 0.08, about 0.08, between 0.05 and 0.08, between 0.05 and 0.07, about 0.06, between 0.01 and 0.05, between 0.01 and 0.04, between 0.01 and 0.03, or between 0.01 and 0.02. In some embodiments, the laminations of the rotor have a thickness of approximately 0.35 mm. In some embodiments, the distance 2052 is between zero and ten times the thickness of the rotor laminations (e.g., 0 mm to 3.5 mm). In some embodiments, the thickness of the magnets 2004 should not exceed twenty times the air gap thickness, which is applicable to all similarly shaped rotors described herein. In some embodiments, the width of the magnets is between 1.0 mm and 2.0 mm or, for example, 1.5 mm.

FIG. 12B illustrates a rotor 2100, according to some embodiments, for use in an electric motor. In some embodiments, the rotor 2100 is, for example, a flux intensifying rotor. The rotor 2100 may be similar in certain respects to the rotors 1202, 2000 of FIGS. 12 and 12A, except for certain differences that are apparent from the figures. The rotor 2100 includes gaps 2148 that may be modified relative to the gaps 2048 of FIG. 12A such that the distance 2052 has been reduced to zero or approximately zero. The gaps 2148 are V-shaped gaps 2148.

FIG. 12C illustrates a rotor 2200, according to some embodiments, for use in an electric motor. In some embodiments, the rotor 2200 is, for example, a flux intensifying rotor. The rotor 2200 may be similar in certain respects to the rotors 1202, 2000, 2100 of FIGS. 12, 12A, and 12B, except for certain differences apparent from the figures. The rotor 2200 includes gaps 2248 that may be modified relative to the gaps 2048 of FIG. 12A such that the gaps 2248 are formed as linear gaps without the V-shaped portions 1249. In some embodiments, the distance 2052 of FIG. 12A is equal to ten times the lamination thickness.

FIG. 12D illustrates a rotor 2300, according to some embodiments, for use in an electric motor. In some embodiments, the rotor 2300 is, for example, a flux intensifying rotor. The rotor 2300 may be similar in certain respects to the rotors 1202, 2000, 2100, 2200 of FIGS. 12, 12A, 12B, and 12C, except for certain differences apparent from the figures. The rotor 2300 includes gaps 2348 that may be modified relative to the gaps 2048 of FIG. 12A. For example, the gaps 2348 may not include linear portions 2050 but rather only V-shaped portions 2349. The V-shaped portions 2349 may include two adjacent sides 1253. An angle between the two adjacent sides 1253 may be, in some embodiments, approximately 90 degrees, between 80 and 100 degrees, between 70 and 110 degrees, or between 60 and 120 degrees. The V-shaped portions 2049 of FIG. 12A may be similarly dimensioned in some embodiments. The V-shaped portions 2349 may be sized and shaped to determine a desired distance 2352 between a permanent magnet 2304 and the adjacent gap 2348. For example, a ratio of the distance 2352 to a width of the magnet 2304 (measured similarly to, for example, the width 2032 in FIG. 12A) may be for example 0.01, between 0.01 and 0.05, between 0.02 and 0.07, between 0.03 and 0.10, between 0.04 and 0.15, between 0.05 and 0.20, about 0.10, or between 0.08 and 0.12.

FIG. 12E illustrates a rotor 2400, according to some embodiments, for use in an electric motor. In some embodiments, the rotor 2300 is, for example, a flux intensifying rotor. The rotor 2300 may be similar in certain respects to the rotors 1202, 2000, 2100, 2200, 2300 of FIGS. 12, 12A, 12B, 12C, and 12D, except for certain differences apparent from the figures. The rotor 2400 includes gaps 2448 that may be modified relative to the gaps 2048 of FIG. 12A. For example, the gaps 2448 may be extended towards a longitudinal axis 2412 of the rotor 2400 relative to the gaps 2048 of FIG. 12A (e.g., more than halfway to the axis 2412). The gaps 2448 include a V-shaped portion 2449 and an extension portion 2450. In some embodiments, the extension portion 2450 may be a linear portion 2450, or the extension portion 2450 may be sloped like the V-shaped portion 2449 but at a steeper slope than the V-shaped portion 2449. The V-shaped portions 2449 may be defined by a radial distance 2453, and the extension portions 2450 may be defined by a radial distance 2454 relative to the longitudinal axis 2412. A ratio of the distance between 2453 to the distance 2454 may be about 1.0, about 0.9, about 0.8, about 0.7, about 0.5, about 1.1, about 1.2, about 1.3, about 1.4, about 1.5, between 0.55 and 1.45, between 0.65 and 1.35, between 0.75 and 1.25, between 0.85 and 1.15, or between 0.95 and 1.05.

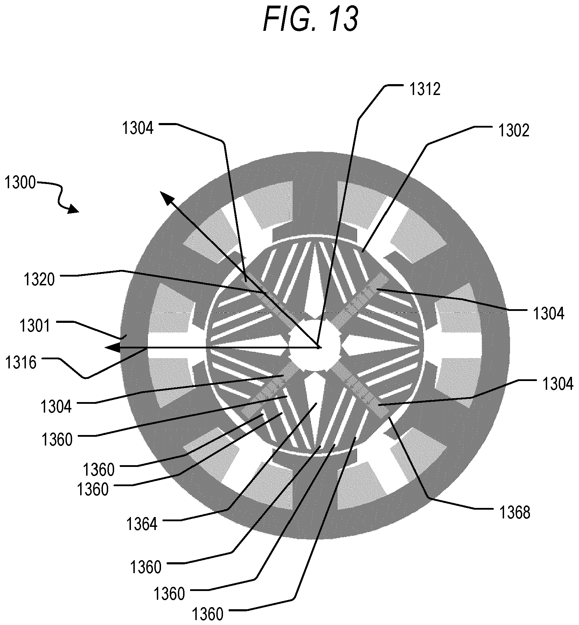

FIG. 13 illustrates a motor 1300, according to some embodiments. In some embodiments, the motor 1300 is, for example, a flux intensifying motor. The motor 1300 includes an outer stator 1301 and an inner rotor 1302. The rotor 1302 of the motor 1300 includes permanent magnets 1304 positioned in a spoke-type configuration (e.g., extending axially out from a longitudinal axis 1312 of the motor 1300). The rotor 1302 of the motor 1300 includes a plurality of air gaps or voids in the rotor lamination stack (e.g., non-magnetic material removed), which results in increased flux. More specifically, the rotor 1302 includes gaps formed as slits 1360 and gaps formed as arrowhead gaps 1364. The slits 1360 are positioned transversely to the magnets 1304, and the arrowhead gaps 1364 (and in the illustrated embodiment, four arrowhead gaps 1364) extend radially outwardly from the longitudinal axis 1312. Each arrowhead gap 1364 is positioned at a 90-degree angle relative to an adjacent arrowhead gap 1364. Q-axes 1316 may be aligned along the magnets 1304 (i.e., along a radial direction from the longitudinal axis 1312). D-axes 1320 may be positioned transverse to the q-axes 1320. Along the q-axes 1316, external notches 1368 are provided at an outer circumference of the rotor 1302 to act as flux barriers along the q-axes. In some embodiments, each notch 1368 is defined by a circular segment across an outer circumference of the rotor 1302. The segment defining the notch 1368 may span, for example, about 5 degrees, about 10 degrees, about 15 degrees, about 20 degrees, about 25 degrees, about 30 degrees, about 35 degrees, about 40 degrees, about 45 degrees, about 50 degrees, about 55 degrees, about 60 degrees, about 65 degrees, about 70 degrees, about 75 degrees, about 80 degrees, about 85 degrees, about 90 degrees, between 15 and 75 degrees, between 30 and 60 degrees, or between 40 and 50 degrees.

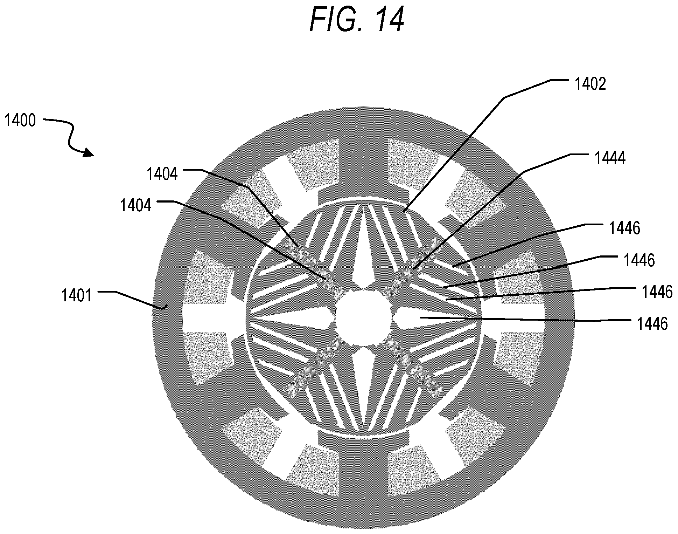

FIG. 14 illustrates a motor 1400, according to some embodiments. In some embodiments, the motor 1400 is, for example, a flux intensifying motor. The motor 1400 includes an outer stator 1401 and an inner rotor 1402. The rotor 1402 of the motor 1400 includes permanent magnets 1404 positioned in a spoke-type configuration. The motor 1400 may be similar in certain respects to the motor 1300 of FIG. 13, except for certain differences apparent from the figures. The rotor 1402 of the motor 1400 includes a spoke-type configuration for the rotor magnets (e.g., extending axially out from the center of the motor). In the illustrated embodiment, the rotor 1402 of the motor 1400 includes mid-ribs 1444 that divide each magnet slot into two magnet slots such that eight magnets 1404 are each positioned in a respective magnet cavity or section. In some embodiments, the mid-ribs 1444 are centrally-located at the center of each large magnet slot (i.e., separating two approximately equal-sized magnet cavities). The rotor of the motor 1400 also includes a plurality of air gaps or voids 1446 in the rotor lamination stack (e.g., non-magnetic material removed), which results in increased flux.

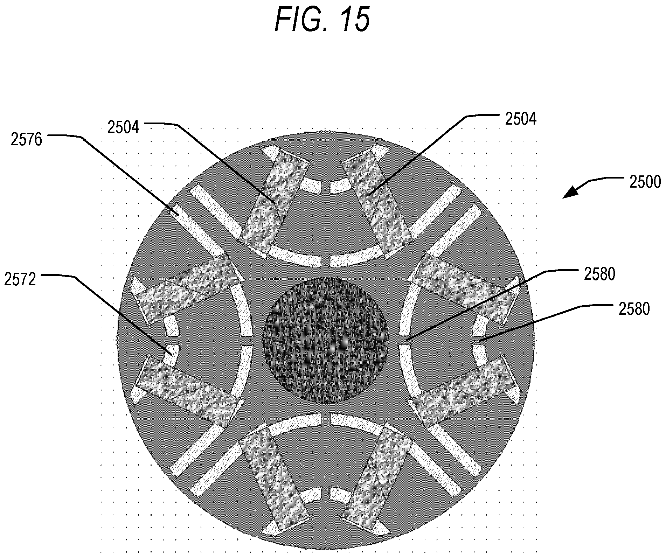

FIG. 15 illustrates a rotor 2500 for use with an electric motor, according to some embodiments. In some embodiments, the rotor 2500 is, for example, a flux intensifying rotor. The rotor 2500 includes a plurality of permanent magnets 2504. In the illustrated embodiment, eight magnets 2504 are arranged in pairs of two, each pair forming a V-shaped configuration relative to a center of the rotor 2500. Two layers of gaps or voids (i.e., flux barriers) are provided in the rotor, and more specifically, outer flux barriers 2572 are provided radially outwardly relative to inner flux barriers 2576. The flux barriers 2572, 2576 may be formed as arcs, semicircles, parabolas, or other curved shapes opening outwardly relative to the center of the rotor 2500. In the illustrated embodiment, four sets of flux barriers 2572, 2576 are positioned at 90-degree angles relative to each other. Mid-ribs 2580 are positioned at a middle region (or in some embodiments, in the middle) of the flux barriers 2572, 2576.

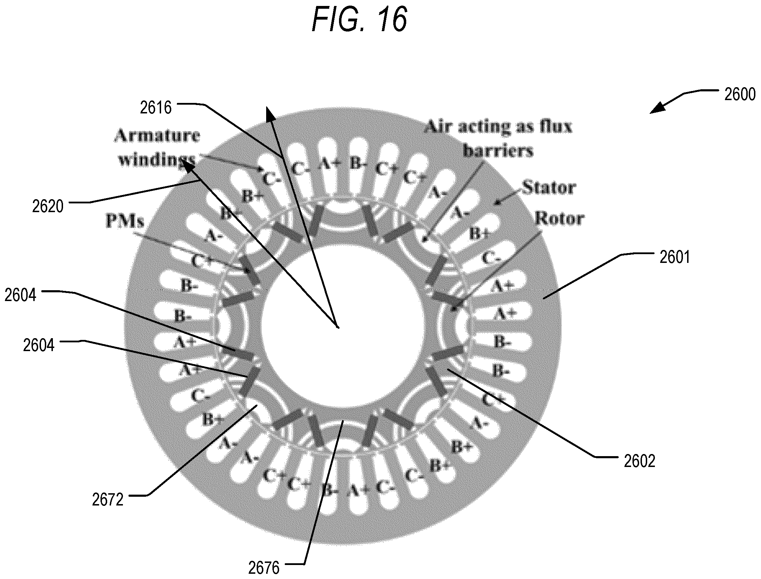

FIG. 16 illustrates a motor 2600, according to some embodiments. In some embodiments, the motor 2600 is, for example, a flux intensifying motor. The motor 2600 includes an outer stator 2601 and an inner rotor 2602. The rotor 2602 includes a plurality of permanent magnets 2604, and in the illustrated embodiment, includes sixteen magnets 2604. The magnets 2604 are arranged in eight pairs each forming a V-shape configuration. A plurality of gaps or voids acting as outer flux barriers 2672 and inner flux barriers 2676. Each flux barrier 2672, 2676 is (as a gap or void) filled with air, thereby altering flux in the motor. The outer flux barriers 2672 are thicker than the inner flux barriers 2676 in a radial direction. A ratio of a thickness of the outer flux barriers 2672 to a thickness of the inner flux barriers 2676 may be about 2, about 2.5, about 3, about 3.5, about 4, about 4.5, about 5, about 5.5, about 6, between 2 and 6, or between 3 and 5. The flux barriers 2672, 2676 open outwardly in a radial direction, and one pair of inner and outer flux barriers 2672, 2676 is provided for each V-shaped pair of magnets 2604. As a flux intensifying electric motor, the motor 2600 generates a flux Ld along a d-axis 2616 that is greater than a flux Lq along a q-axis 2620.

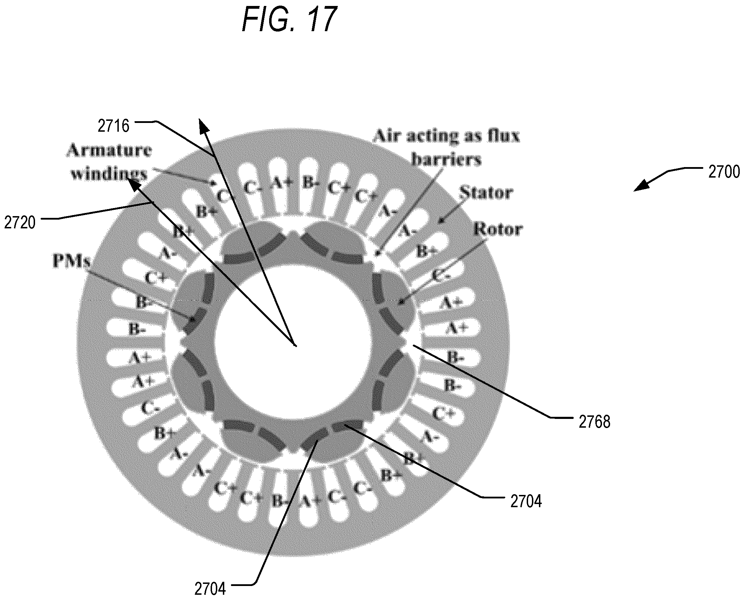

FIG. 17 illustrates a motor 2700, according to some embodiments. In some embodiments, the motor 2700 is, for example, a flux intensifying motor. The motor 2700 includes an outer stator 2701 and an inner rotor 2702. The rotor 2702 includes a plurality of permanent magnets 2704, and in the illustrated embodiment, includes sixteen magnets 2704. The magnets 2704 are positioned in pairs such that each pair forms a curved shape (e.g., a parabola, hyperbola, or other arc) opening outward from a center of the rotor 2702 in a radial direction. A notch 2768 is provided at an outer circumference of the rotor 2702 between pairs of magnets 2704 in a circumferential direction such that the notches 2768 are positioned along a q-axes 2720 of the motor 2700 (in contrast to a d-axis 2716) to reduce q-axis flux Lq and to provide a flux-intensifying electric motor 2700 with a d-axis flux Ld that is greater than the q-axis flux Lq.

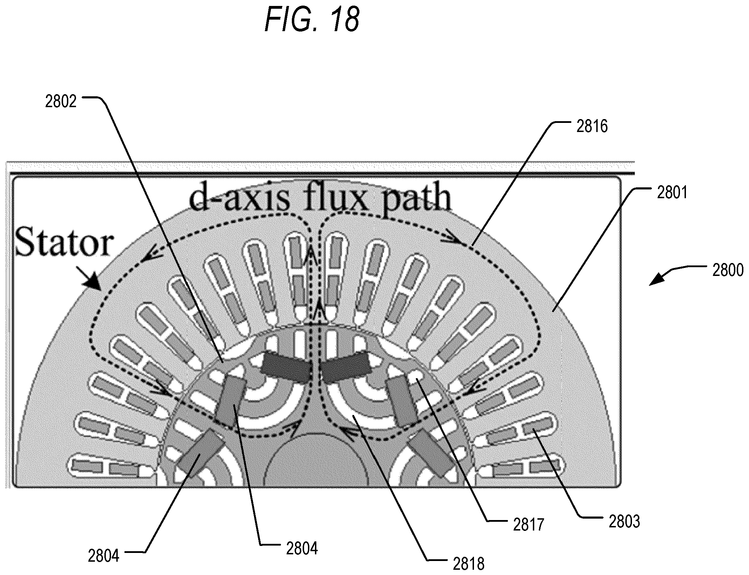

FIG. 18 illustrates a d-axis flux path 2816 in an electric motor 2800 having an outer stator 2801 and an inner rotor 2802, which may be a flux intensifying electric motor in some embodiments. The electric motor 2800 may be similar in certain respects to the motors 2500, 2600 of FIGS. 15 and 16 except for certain differences that are apparent from the figures. The stator 2801 includes windings 2803, and the rotor 2802 includes permanent magnets 2804 and flux barriers 2817, 2818.

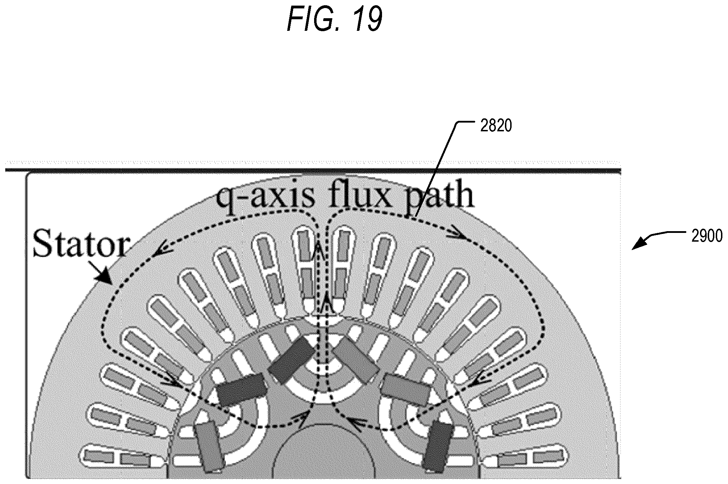

FIG. 19 illustrates a q-axis flux path 2820 in the electric motor 2800 of FIG. 18. In some embodiments of the motor 2800, the d-axis flux path is angularly offset with respect to the q-axis flux path 2820 and may be angularly offset by, for example, 30 degrees.

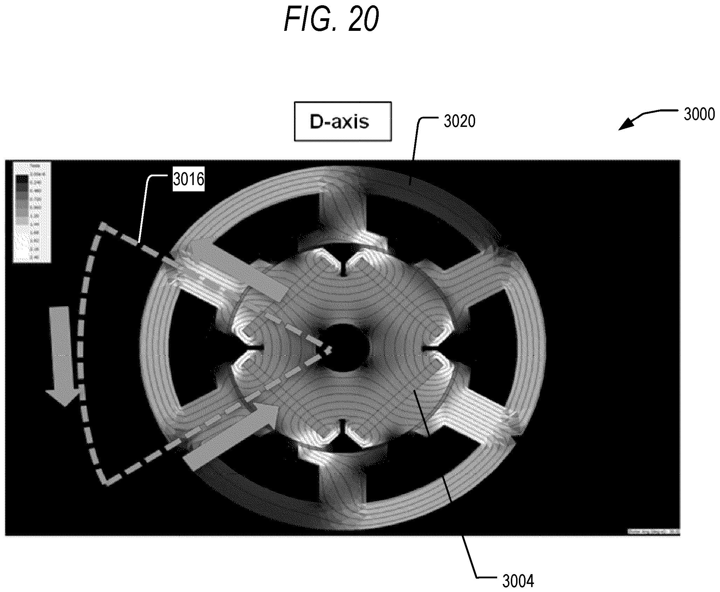

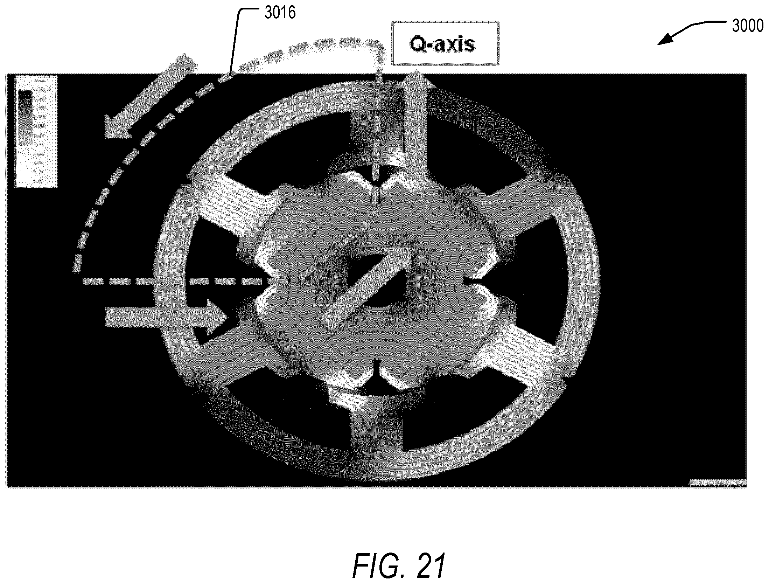

FIGS. 20 and 21 illustrate a d-axis flux path 3016 and a q-axis flux path 3020 in an electric motor 3000 having permanent magnets 3004 in a square configuration, which may be a flux intensifying electric motor in some embodiments. The d-axis flux path 3016 and the q-axis flux path 3020 may be circumferentially offset and, in some embodiments, may be circumferentially offset by 30 degrees.

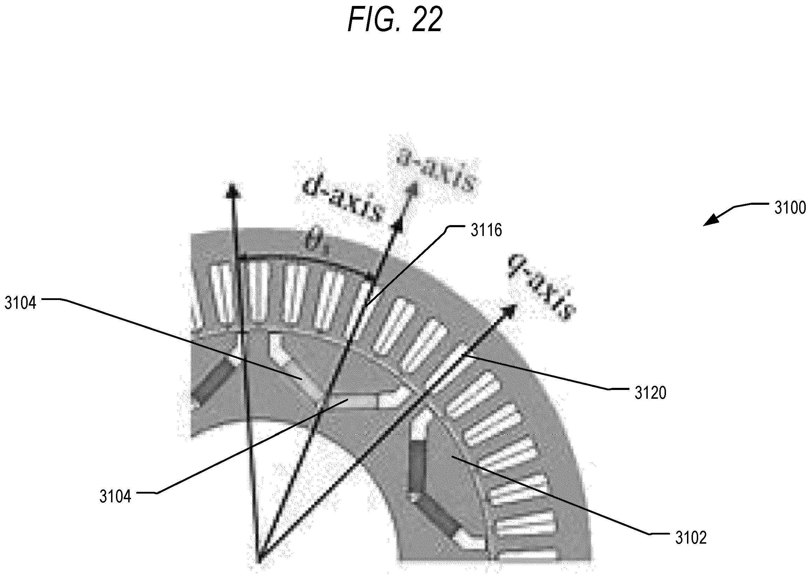

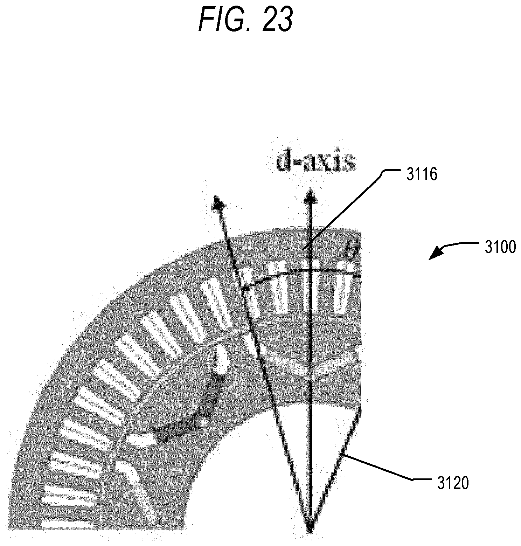

FIGS. 22 and 23 illustrate a d-axis 3116 and a q-axis 3120 along in an electric motor 3100 having an inner rotor 3102, which may be a flux intensifying electric motor in some embodiments. The rotor 3102 includes permanent magnets 3104 arranged in pairs having a V-shaped configuration. In the illustrated embodiment, the d-axis 3116 passes through a radially-inward point of the V-shaped configuration of a pair of magnets 3104, and the q-axis passes between adjacent V-shaped pairs of magnets 3104. The d-axis 3116 is circumferentially offset from the q-axis 3120 by an angle 0, which may be, for example, 30 degrees.

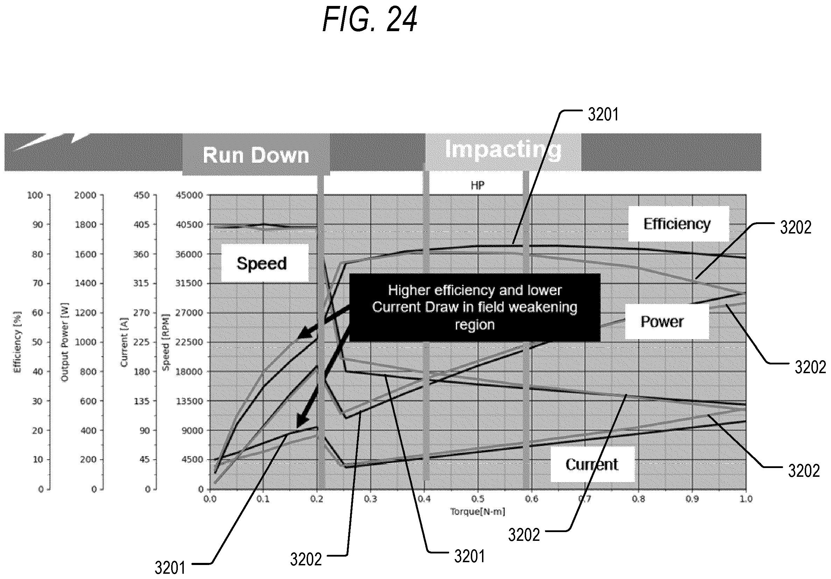

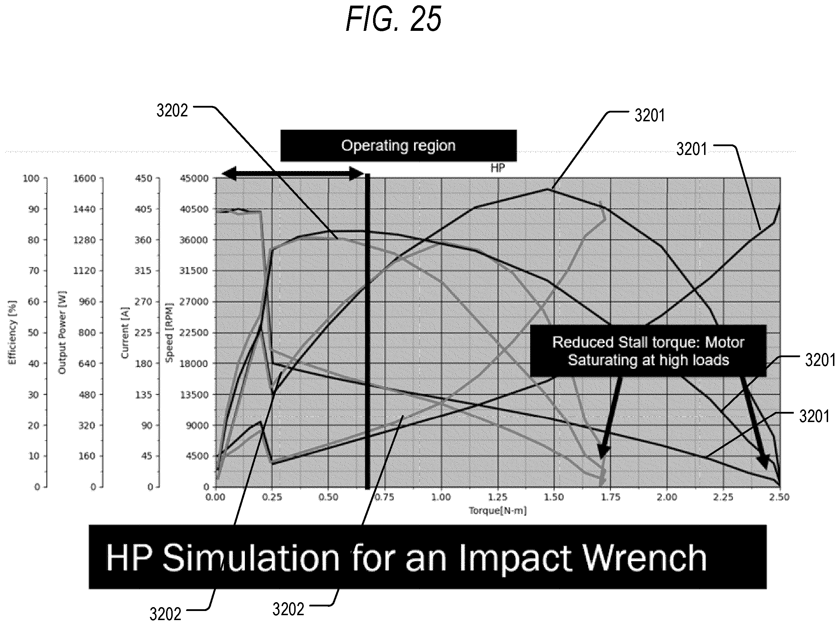

FIGS. 24 and 25 illustrate graphs of efficiency, output power in Watts, current in Amps, and speed in RPM as a function of torque in N-m. Graph lines associated with a standard rotor (20Tx0.95mm PD; S.I. of 26.72 mΩ; pack voltage of 20.32 V) are indicated with a reference numeral 3201. Graph lines associated with a flux-intensifying motor adapted for field weakening performance (20Tx0.95mm PD; 26.29 mΩ; pack voltage of 20.32 V) are indicated with a reference numeral 3202.

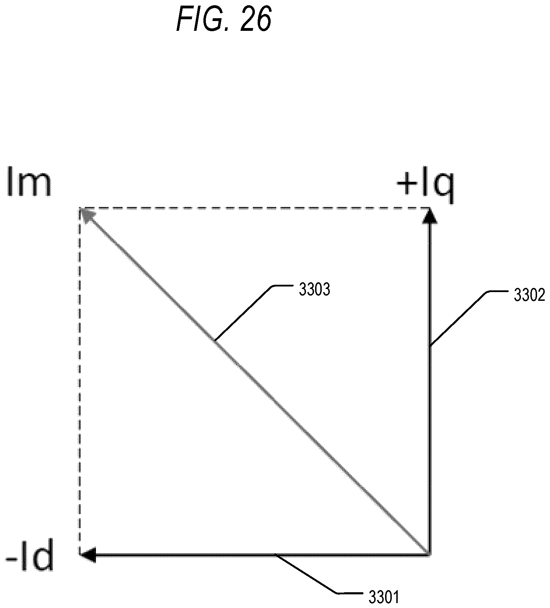

FIG. 26 illustrates a current chart showing a negative d-axis current 3301, a positive q-axis current 3302, and a current magnitude 3303.

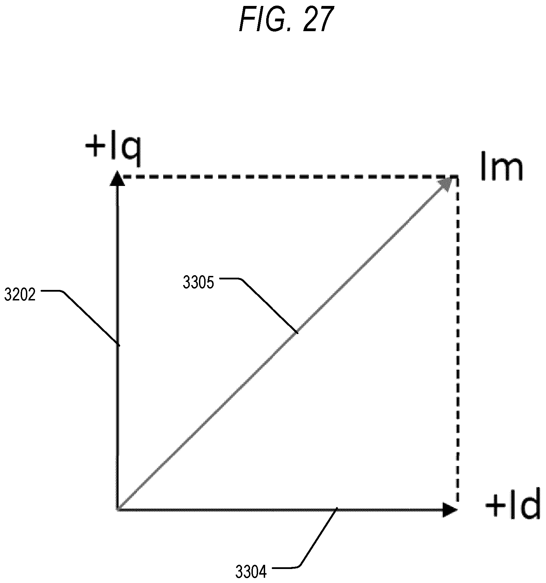

FIG. 27 illustrates a current chart showing a positive d-axis current 3304 and a new current magnitude 3305 when the current configuration of FIG. 26 undergoes field-weakening behavior (i.e., a change in the d-axis current 3301 in a positive direction). Applying field-weakening to the current configuration of FIG. 26 increases the current magnitude 3303 to the new current magnitude 3305. These currents are represented as vectors. The positive d-axis current is indicative of the flux intensifying motors as described herein.

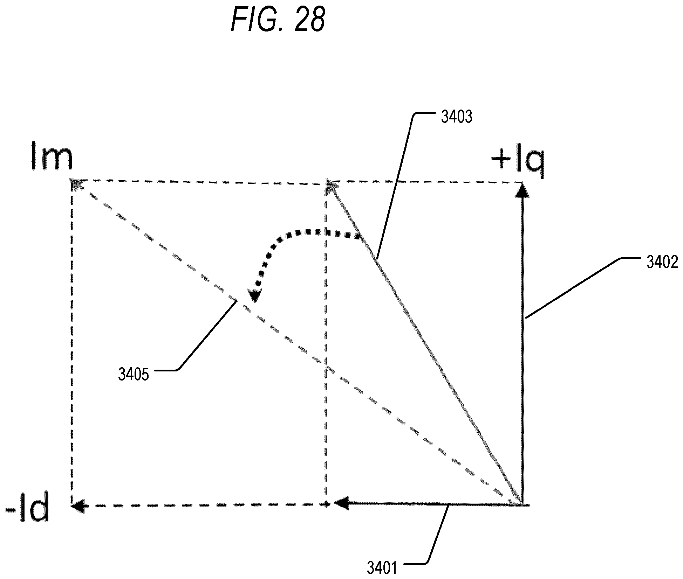

FIG. 28 illustrates a current chart showing a positive d-axis current 3401, a positive q-axis current 3402, and a current magnitude 3403. The configuration of FIG. 28 is indicative of an existing electric motor undergoing field weakening. Conditions at which a maximum torque per amp may be achieved for a constant current magnitude 3403 may be set based on a vector angle of the d-axis current 3401 and the q-axis current 3402.

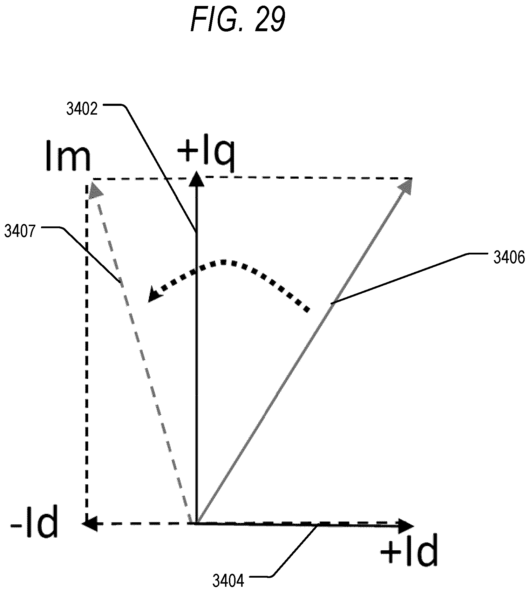

FIG. 29 illustrates a current chart showing a positive d-axis current 3404 and a new current magnitude 3406 when the current configuration of FIG. 28 undergoes field-weakening behavior (i.e., a change in the d-axis current 3401 in a negative direction). Applying field-weakening to the current configuration of FIG. 28 increases the current magnitude 3403 to the new current magnitude 3405. These currents are represented as vectors. FIG. 29 shows that applying field-weakening to a flux-intensifying electric motor (positive d-axis current) maintains a nearly constant current magnitude (comparing the new current magnitude 3407 to the current magnitude 3405). In other words, flux-intensifying motors require less current for the same amount of field weakening.

Inductance (represented as L) is a property of a current-carrying circuit that causes magnetic flux. Magnetic flux linkage is equal to inductance times current. In a brushless DC motor, a stator experiences two types of inductances: Ld along a d-axis and Lq along a q-axis. Field weakening flux is proportional to Ld times id (a current along the d-axis). Increasing Ld allows a higher field weakening capability to be achieved. Adding mid-ribs between magnets increases Ld. Spoke-type motors tend to have a relatively high Ld. In other words, increasing d-axis inductance tends to improve field weakening performance.

Under certain conditions, greater negative d-axis currents can lead to demagnetization. Therefore, because a flux-intensifying motor operates at positive d-axis currents, flux-intensifying motors are less susceptible to demagnetization under field-weakening conditions and at higher currents during normal operating conditions.

Field weakening performance may be increased by increasing saliency (that is, the difference between the Ld inductance along the d-axis and the Lq inductance along the q-axis). Torque may be determined as being equal to permanent magnet (PM) torque plus reluctance torque. Reluctance torque is proportional to the term (Ld-Lq), or Ld minus Lq. A permanent magnet synchronous reluctance motor (PMaSynRM) tends to have greater saliency compared to certain other motors.

Also, using magnets of narrower widths tends to increase field weakening performance. For example, all else being equal, the motor 500 of FIG. 5 could be expected to have greater field weakening performance than the motor 1600 of FIG. 5B.

Air gaps along the q-axis (such as within the rotor or at a circumference of the rotor) act as a flux barrier to reduce the Lq inductance value along the q-axis.

Torque of an electric motor may be calculated as follows:

$$T = k(\psi_{pm}i_q + (L_q - L_d)i_d i_q)$$

In other words, torque is equal to permanent magnet torque plus reluctance torque. The term (Lq-Ld) is also known as "saliency." Lq is inductance along the q-axis, and Ld is inductance along the d-axis. Because of the saliency term, a change in Ld relative to Lq changes the torque of the motor.

Table 1 below shows values of magnet volume, no load speed, no load current, speed per unit of current, average speed at 0.4-0.55 N-m, average current at 0.4-0.55 N-m, and average efficiency at 0.4-0.55 N-m for a variety of motors shown in the figures.

**TABLE #1**

| | Magnet Vol. mm³ | No Load Speed (FW) | No Load Current (FW) | RPM/A (No Load) | Average Speed at 0.4-0.55 Nm | Average Current at 0.4-0.55 Nm | Avg. Efficiency % at 0.4-0.55 Nm |
|---|---|---|---|---|---|---|---|
| Benchmark BLDC (FIG. 5C) | 3013 | 45,398 | 61 | 744 | 16,792 | 57 | 81.5 |
| BLDC Narrow Mag (FIG. 5) | 2483 (-18%) | 45,010 | 50 | 900 | 16,600 | 56.5 | 81.5 |
| V-Type (FIG. 7) | 3020 | 45,000 | 49 | 918 | 16,540 | 56.5 | 81 |
| Spoke-Type (FIG. 8) | 1557 N50 (-48%) | 45,000 | 46 | 957 | 16,400 | 56.5 | 81 |
| PMaSynRM (FIG. 6) | 3030 | 45,276 | 50 | 906 | 16,874 | 58.5 | 81 |

Table 2 below shows values of magnet volume, no load speed, no load current, speed per unit of current, average speed at 0.4-0.55 N-m, average current at 0.4-0.55 N-m, and average efficiency at 0.4-0.55 N-m for a variety of motors shown in the figures.

**TABLE #2**

| | Magnet Vol. | No Load Speed (FW) | No Load Current (FW) | RPM/A (No Load) | Average Speed at 0.4-0.55 Nm | Average Current at 0.4-0.55 Nm | Avg. Efficiency % at 0.4-0.55 Nm |
|---|---|---|---|---|---|---|---|
| Benchmark BLDC (FIG. 5C) | 3013 | 45,398 | 61 | 744 | 16,792 | 57 | 81.5 |
| BLDC Narrow Mag (FIG. 5) | 2483 (-18%) | 45,010 | 50 | 900 | 16,600 | 56.5 | 81.5 |
| BLDC Narrow Mag Mid Rib (FIG. 9) | 2371 (-21%) | 44,900 | 46 | 976 | 16,712 | 57.5 | 81 |
| Spoke-Type (FIG. 8) | 1557 N50 (-48%) | 45,000 | 46 | 957 | 16,400 | 56.5 | 81 |
| Spoke-Type Mid Rib (FIG. 11) | 1371 N50 (-55%) | 45,000 | 45 | 1000 | 16,520 | 60 | 79 |
| PMaSynRM (FIG. 6) | 3030 | 45,276 | 50 | 906 | 16,874 | 58.5 | 81 |
| PMaSynRM Mid Rib (FIG. 10) | 3030 | 45,110 | 47.3 | 960 | 16,843 | 60 | 80 |

Table 3 below shows values of magnet volume ($mm^3$), no load speed, no load current (A), speed per unit of current, average speed at 0.4-0.55 N-m, average current at 0.4-0.55 N-m, and average efficiency at 0.4-0.55 N-m for a variety of motors shown in the figures.

**TABLE #3**

| | Magnet Vol. | No Load Speed (FW) | No Load Current (FW) | RPM/A (No Load) | Average Speed at 0.4-0.55 Nm | Average Current at 0.4-0.55 Nm | Avg. Efficiency % at 0.4-0.55 Nm |
|---|---|---|---|---|---|---|---|
| Benchmark BLDC (FIG. 5C) | 3013 | 45,398 | 61 | 744 | 16,792 | 57 | 81.5 |
| BLDC Narrow Mag (FIG. 5) | 2483 (-18%) | 45,010 | 50 | 900 | 16,600 | 56.5 | 81.5 |
| BLDC Narrow Mag Flux Intensifying (FIG. 12) | 2,880 (-4%) | 45,300 | 45 | 1007 | 17,053 | 63.5 | 77 |
| Spoke-Type (FIG. 8) | 1557 N50 (-48%) | 45,000 | 46 | 957 | 16,400 | 56.5 | 81 |
| Spoke-Type Flux Intensifying (FIG. 13) | 1557 N50 (-48%) | 45,100 | 46 | 980 | 16,200 | 55.5 | 81.5 |

(continued)

| | Magnet Vol. | No Load Speed (FW) | No Load Current (FW) | RPM/A (No Load) | Average Speed at 0.4-0.55 Nm | Average Current at 0.4-0.55 Nm | Avg. Efficiency % at 0.4-0.55 Nm |
|---|---|---|---|---|---|---|---|
| Spoke-Type Mid Rib (FIG. 11) | 1371 N50 (-55%) | 45,000 | 45 | 1000 | 16,520 | 60 | 79 |
| Spoke-Type Mid Rib Flux Intensifying (FIG. 14) | 1371 N50 | 44,980 | 43 | 1050 | 16,425 | 60 | 78.5 |

Motors such as those disclosed herein may be used in a variety of power tools. Motors such as those disclosed herein may be used in battery pack powered power tools. Motors such as those disclosed herein may be used in impact wrenches, nut runners, pumps, or shear wrenches. Motors such as those disclosed herein may be used in power tools that do not operate until stall and which have a specific load region such that field weakening is appropriate.

Under field weakening, certain motors disclosed herein may obtain higher rundown speed and lower no-load current with a better efficiency at no load.

## REPRESENTATIVE FEATURES

Representative features are set out in the following clauses, which stand alone or may be combined, in any combination, with one or more features disclosed in the text and/or drawings of the specification.

Clause 1. A power tool comprising:

a battery pack interface configured to receive a removable and rechargeable battery pack; and
a motor including:

a stator including a plurality of stator teeth configured to receive a plurality of stator coils, and
a rotor including:
a plurality of slots configured in a spoke-type configuration, each of the plurality of slots including a magnet housing portion configured to receive one or more magnets,
wherein the rotor includes a direct axis inductance and a quadrature axis inductance,
wherein the direct axis inductance of the rotor is greater than the quadrature axis inductance of the rotor, and
wherein a direct axis current of the motor is positive during operation of the motor.

Clause 2. The power tool of clause 1, wherein each magnet housing portion includes a centrally-located mid-rib that divides each magnet housing portion into a first section and a second section.

Clause 3. The power tool of clause 2, wherein the first section is configured to receive a first magnet and the second section is configured to receive a second magnet.

Clause 4. The power tool of clause 3, wherein the rotor includes a total of eight magnets.

Clause 5. The power tool of any preceding clause, wherein the rotor includes a total of four magnets.

Clause 6. The power tool of any preceding clause, wherein each of the plurality of slots includes an open air gap at an outer circumferential surface of the rotor.

Clause 7. The power tool of any preceding clause, wherein the rotor includes a plurality of air gaps positioned between adjacent ones of the plurality of slots.

Clause 8. The power tool of any preceding clause, wherein the rotor includes a magnet volume of less than 3,000 millimeters cubed ("mm$^3$").

Clause 9. The power tool of clause 8, wherein the rotor includes a magnet volume of less than 1,500 millimeters cubed ("mm³").

Clause 10. A power tool comprising:

a battery pack interface configured to receive a removable and rechargeable battery pack; and
a motor including:

a stator including a plurality of stator teeth configured to receive a plurality of stator coils, and
a rotor including:
a plurality of slots positioned perpendicular to a radial axis of the rotor, each of the plurality of slots including a magnet housing portion configured to receive one or more magnets,
wherein the rotor includes a direct axis inductance and a quadrature axis inductance,
wherein the direct axis inductance of the rotor is greater than the quadrature axis inductance of the rotor, and
wherein a direct axis current of the motor is positive during operation of the motor.

Clause 11. The power tool of clause 10, wherein each magnet housing portion includes a centrally-located mid-rib that divides each magnet housing portion into a first section and a second section.

Clause 12. The power tool of clause 11, wherein the first section is configured to receive a first magnet and the second section is configured to receive a second magnet.

Clause 13. The power tool of clause 12, wherein the rotor includes a total of eight magnets.

Clause 14. The power tool of any of clauses 10-13, wherein the rotor includes a magnet volume of less than 3,000 millimeters cubed ("mm³").

Clause 15. The power tool of any of clauses 10-14, wherein the rotor includes a magnet volume of less than 2,500 millimeters cubed ("mm³").

Clause 16. The power tool of any of clauses 10-15, wherein the rotor includes a plurality of air gaps positioned on an outer circumferential surface of the rotor.

Clause 17. The power tool of clause 16, wherein the plurality of air gaps are funnel-shaped and each of the plurality of air gaps is located between adjacent slots of the plurality of slots.

Clause 18. A power tool comprising:

a battery pack interface configured to receive a removable and rechargeable battery pack; and
a motor including:

a stator including a plurality of stator teeth configured to receive a plurality of stator coils, and
a rotor including:
a plurality of slots configured in pairs to form a V-shaped configuration, each of the plurality of slots including a magnet housing portion configured to receive one or more magnets, each pair of the plurality of slots includes a centrally-located mid-rib positioned between a first slot of the pair and a second slot of the pair,
wherein the rotor includes a direct axis inductance and a quadrature axis inductance,
wherein the direct axis inductance of the rotor is greater than the quadrature axis inductance of the rotor, and
wherein a direct axis current of the motor is positive during operation of the motor.

Clause 19. The power tool of clause 18, wherein the rotor includes a magnet volume of less than 3,000 millimeters cubed ("mm³").

Clause 20. The power tool of clause 19, wherein the rotor includes a magnet volume of less than 1,500 millimeters cubed ("mm³").

Various features and advantages of the disclosure are set forth in the following claims.

**Claims**

1. A power tool comprising:

   a battery pack interface configured to receive a removable and rechargeable battery pack; and
   a motor including:

   a stator including a plurality of stator teeth configured to receive a plurality of stator coils, and
   a rotor including:
   a plurality of slots configured in a spoke-type configuration, each of the plurality of slots including a magnet housing portion configured to receive one or more magnets,
   wherein the rotor includes a direct axis inductance and a quadrature axis inductance,
   wherein the direct axis inductance of the rotor is greater than the quadrature axis inductance of the rotor, and
   wherein a direct axis current of the motor is positive during operation of the motor.

2. The power tool of claim 1, wherein each magnet housing portion includes a centrally-located mid-rib that divides each magnet housing portion into a first section and a second section.

3. The power tool of claim 2, wherein the first section is configured to receive a first magnet and the second section is configured to receive a second magnet.

4. The power tool of claim 3, wherein the rotor includes a total of eight magnets.

5. The power tool of claim 1, wherein the rotor includes a total of four magnets.

6. The power tool of claim 1, wherein each of the plurality of slots includes an open air gap at an outer circumferential surface of the rotor.

7. The power tool of claim 1, wherein the rotor includes a plurality of air gaps positioned between adjacent ones of the plurality of slots.

8. The power tool of claim 1, wherein the rotor includes a magnet volume of less than 3,000 millimeters cubed ("mm$^3$").

9. The power tool of claim 8, wherein the rotor includes a magnet volume of less than 1,500 millimeters cubed ("mm$^3$").

10. A power tool comprising:

    a battery pack interface configured to receive a removable and rechargeable battery pack; and
    a motor including:

    a stator including a plurality of stator teeth configured to receive a plurality of stator coils, and
    a rotor including:
    a plurality of slots positioned perpendicular to a radial axis of the rotor, each of the plurality of slots including a magnet housing portion configured to receive one or more magnets,
    wherein the rotor includes a direct axis inductance and a quadrature axis inductance,
    wherein the direct axis inductance of the rotor is greater than the quadrature axis inductance of the rotor, and
    wherein a direct axis current of the motor is positive during operation of the motor.

11. The power tool of claim 10, wherein each magnet housing portion includes a centrally-located mid-rib that divides each magnet housing portion into a first section and a second section.

12. The power tool of claim 11, wherein the first section is configured to receive a first magnet and the second section is configured to receive a second magnet.

13. The power tool of claim 10, wherein the rotor includes a magnet volume of less than 3,000 millimeters cubed ("mm$^3$").

14. The power tool of claim 10, wherein the rotor includes a magnet volume of less than 2,500 millimeters cubed ("mm$^3$").

**15.** The power tool of claim 10, wherein:

the rotor includes a plurality of air gaps positioned on an outer circumferential surface of the rotor; and
the plurality of air gaps are funnel-shaped and each of the plurality of air gaps is located between adjacent slots of the plurality of slots.

## FIG. 1

FIG. 2

EP 4 535 618 A1

FIG. 3

## FIG. 4

EP 4 535 618 A1

FIG. 5

FIG. 5A

FIG. 5B

FIG. 5C

EP 4 535 618 A1

## FIG. 6

EP 4 535 618 A1

# FIG. 7

## FIG. 8

FIG. 8A

FIG. 9

FIG. 9A

EP 4 535 618 A1

FIG. 10

EP 4 535 618 A1

FIG. 11

FIG. 12

## FIG. 12A

EP 4 535 618 A1

FIG. 12B

FIG. 12C

FIG. 12D

FIG. 12E

FIG. 13

FIG. 14

## FIG. 15

FIG. 16

## FIG. 17

EP 4 535 618 A1

EP 4 535 618 A1

# FIG. 18

FIG. 19

## FIG. 20

FIG. 21

FIG. 22

EP 4 535 618 A1

FIG. 23

EP 4 535 618 A1

## FIG. 24

EP 4 535 618 A1

FIG. 25

HP Simulation for an Impact Wrench

*FIG. 26*

FIG. 27

EP 4 535 618 A1

FIG. 28

## FIG. 29

EP 4 535 618 A1

Europäisches
Patentamt

European
Patent Office

Office européen
des brevets

# EUROPEAN SEARCH REPORT

Application Number

EP 24 20 4493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2022/162758 A1 (PANASONIC IP MAN CO LTD [JP]) 4 August 2022 (2022-08-04)<br>* claim 6; figures 1, 3 *<br>- - - - - | 1-9 | INV.<br>H02K1/276<br>H02K7/14 |
| Y | LIMSUWAN NATEE ET AL: "Design and Evaluation of a Variable-Flux Flux-Intensifying Interior Permanent-Magnet Machine",<br>IEEE TRANSACTIONS ON INDUSTRY APPLICATIONS, IEEE SERVICE CENTER, PISCATAWAY, NJ, US,<br>vol. 50, no. 2, 1 March 2014 (2014-03-01), pages 1015-1024, XP011543226,<br>ISSN: 0093-9994, DOI: 10.1109/TIA.2013.2273482<br>[retrieved on 2014-03-17]<br>* page 1016, column 1, lines 6-12; figures 2a-2d *<br>* page 1020, column 1, lines 4-8 *<br>- - - - - | 1-3,6, 8-15 | |
| Y | FONTANA MICHELE ET AL: "Design and Analysis of Normal Saliency IPM Spoke Motor",<br>IEEE TRANSACTIONS ON INDUSTRY APPLICATIONS, IEEE SERVICE CENTER, PISCATAWAY, NJ, US,<br>vol. 56, no. 4, 24 April 2020 (2020-04-24) , pages 3625-3635, XP011799183,<br>ISSN: 0093-9994, DOI: 10.1109/TIA.2020.2988842<br>[retrieved on 2020-07-17]<br>* page 3627, column 1, lines 7-11; figures 3, 7 *<br>- - - - -<br>-/-- | 1-9 | **TECHNICAL FIELDS SEARCHED (IPC)**<br><br>H02K |

The present search report has been drawn up for all claims

| Place of search | Date of completion of the search | Examiner |
|---|---|---|
| The Hague | 24 January 2025 | Van de Maele, Wim |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ...............................................................
& : member of the same patent family, corresponding
   document

EPO FORM 1503 03.82 (P04C01)

page 1 of 3

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JAYARAJAN REKHA ET AL: "A Review on Variable Flux Machine Technology: Topologies, Control Strategies and Magnetic Materials", IEEE ACCESS, vol. 7, 31 December 2019 (2019-12-31), pages 70141-70156, XP011728966, DOI: 10.1109/ACCESS.2019.2918953 [retrieved on 2019-06-06] * page 70145, column 1, paragraph 4 - column 2, paragraph 1; figures 4a, 8 * | 1-9 | |
| Y | IBRAHIM MAGED ET AL: "Design of variable flux permanent magnet machine for reduced inverter rating", 2014 INTERNATIONAL CONFERENCE ON ELECTRICAL MACHINES (ICEM), IEEE, 2 September 2014 (2014-09-02), pages 1083-1089, XP032687498, DOI: 10.1109/ICELMACH.2014.6960316 [retrieved on 2014-11-17] * page 1983, column 2, lines 26-39; figure 3 * | 1-9 | |
| Y | US 2022/339771 A1 (VERBRUGGE BRANDON L [US] ET AL) 27 October 2022 (2022-10-27) | 10-15 | |
| A | * figures 1, 23-40 * | 1 | |

TECHNICAL FIELDS SEARCHED (IPC)

-/--

The present search report has been drawn up for all claims

| Place of search | Date of completion of the search | Examiner |
|---|---|---|
| The Hague | 24 January 2025 | Van de Maele, Wim |

## EUROPEAN SEARCH REPORT

Europäisches Patentamt
European Patent Office
Office européen des brevets

**Application Number**

EP 24 20 4493

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHEHATA E G: "A Comparison Between Conventional and Flux-Intensifying Interior Permanent Magnet Synchronous Machines", 2021 22ND IEEE INTERNATIONAL CONFERENCE ON INDUSTRIAL TECHNOLOGY (ICIT), IEEE, vol. 1, 10 March 2021 (2021-03-10), pages 121-126, XP033925207, DOI: 10.1109/ICIT46573.2021.9453564 [retrieved on 2021-06-11] * figure 1a * | 10-14 | |
| Y | PRINS MICHIEL H A ET AL: "Design optimisation of field-intensified permanent magnet machine", 2014 INTERNATIONAL CONFERENCE ON ELECTRICAL MACHINES (ICEM), IEEE, 2 September 2014 (2014-09-02), pages 117-123, XP032687795, DOI: 10.1109/ICELMACH.2014.6960168 [retrieved on 2014-11-17] * figures 1, 4a * | 10-15 | |
| Y | KR 2020 0073329 A (KOREA AUTOMOTIVE TECH INST [KR]) 24 June 2020 (2020-06-24) * figures 2, 3, 9, 11 * | 2-4 | TECHNICAL FIELDS SEARCHED (IPC) |
| Y | CN 114 899 964 A (DENSO CORP) 12 August 2022 (2022-08-12) * figure 19 * | 11,12 | |
| Y | DE 10 2012 205361 A1 (BOSCH GMBH ROBERT [DE]) 2 October 2013 (2013-10-02) * figure 1a * | 11,12 | |

The present search report has been drawn up for all claims

| Place of search | Date of completion of the search | Examiner |
|---|---|---|
| The Hague | 24 January 2025 | Van de Maele, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 24 20 4493

24-01-2025

| Patent document cited in search report | Publication date | Patent family member(s) | | Publication date |
|---|---|---|---|---|
| WO 2022162758 A1 | 04-08-2022 | CN | 116746030 A | 12-09-2023 |
| | | EP | 4287460 A1 | 06-12-2023 |
| | | US | 2024079928 A1 | 07-03-2024 |
| | | WO | 2022162758 A1 | 04-08-2022 |
| US 2022339771 A1 | 27-10-2022 | US | 2014131059 A1 | 15-05-2014 |
| | | US | 2021046630 A1 | 18-02-2021 |
| | | US | 2022029506 A1 | 27-01-2022 |
| | | US | 2022339771 A1 | 27-10-2022 |
| | | US | 2023347490 A1 | 02-11-2023 |
| | | US | 2024075605 A1 | 07-03-2024 |
| | | US | 2024326218 A1 | 03-10-2024 |
| KR 20200073329 A | 24-06-2020 | NONE | | |
| CN 114899964 A | 12-08-2022 | CN | 114899964 A | 12-08-2022 |
| | | CN | 115276283 A | 01-11-2022 |
| | | CN | 115276284 A | 01-11-2022 |
| | | CN | 115378160 A | 22-11-2022 |
| DE 102012205361 A1 | 02-10-2013 | DE | 102012205361 A1 | 02-10-2013 |
| | | WO | 2013149768 A2 | 10-10-2013 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63588370